# EUROPEAN PATENT APPLICATION

(11) **EP 4 528 647 A1**
(43) Date of publication of application: **26.03.2025**
(21) Application number: 23890311.6
(22) Date of filing: 18.08.2023
(51) Int. Cl.: G06T 11/00

(54) **IMAGE PROCESSING METHOD AND ELECTRONIC DEVICE**

(30) Priority: 18.11.2022 CN 202211444045
(71) Applicant: Honor Device Co., Ltd., Shenzhen, Guangdong 518040 (CN)
(72) Inventor: XIAO, Yuwei, Shenzhen, Guangdong 518040 (CN); LIU, Zhichao, Shenzhen, Guangdong 518040 (CN)
(74) Representative: Gill Jennings & Every LLP
(86) International application number: PCT/CN2023/113755
(87) International publication number: WO 2024/103872

(57) **Abstract**

Embodiments of this application provide an image processing method and an electronic device. **In** this method, when a predicted frame is calculated based on a first real frame and a second real frame, a motion vector corresponding to the first real frame and the second real frame is first calculated, and an initial mesh Mesh corresponding to the second real frame is created. Then, subdivision points are identified based on depth values of pixels, the initial Mesh is subdivided based on the subdivision points to obtain a target Mesh, and then image warping is performed on the second real frame based on the target Mesh and the motion vector, to generate the predicted frame of image. This can avoid a local stretching problem in an image region with discontinuous depth values in a predicted frame, to better retain continuous graphic information, improve picture quality of the predicted frame of image, and improve user visual experience.

## Description

This application claims priority to Chinese Patent Application No. 202211444045.9, entitled "IMAGE PROCESSING METHOD AND ELECTRONIC DEVICE", and filed with the China National Intellectual Property Administration on November 18, 2022, which is incorporated herein by reference in its entirety.

### TECHNICAL FIELD

This application relates to the field of smart terminal technologies, and in particular, to an image processing method and an electronic device.

### BACKGROUND

A video frame interpolation technology aims to improve a frame rate and smoothness of a video, making the video "buttery smooth". As long as a predicted frame (or referred to as an intermediate frame or a transition frame) is interpolated between adjacent real frames (or referred to as original frames), a frame rate of the video can be doubled. Picture quality of the predicted frame is directly related to smoothness of the video. A motion direction and a speed of each object in an image are calculated by using image information of two adjacent frames, and each object in the image is correspondingly moved, so that a predicted frame can be obtained.

In a current predicted frame generation technology, image warping is a manner to better ensure image continuity. However, in some image regions, an image warping operation may cause local image distortion, resulting in a noticeable difference between a predicted frame of image and a real frame of image, causing severe degradation in user visual experience.

### SUMMARY

To resolve the foregoing technical problem, embodiments of this application provide an image processing method and an electronic device. In this method, when an electronic device calculates a predicted frame based on a first real frame and a second real frame, a motion vector corresponding to the first real frame and the second real frame is first calculated, and an initial mesh Mesh corresponding to the second real frame is created. Then, subdivision points are identified based on depth values of pixels, the initial Mesh is subdivided based on the subdivision points to obtain a target Mesh, and then image warping is performed on the second real frame based on the target Mesh and the motion vector, to generate the predicted frame of image. This can avoid a local stretching problem in an image region with discontinuous depth values in a predicted frame, to better retain continuous graphic information, improve picture quality of the predicted frame of image, and improve user visual experience.

According to a first aspect, an embodiment of this application provides an image processing method. The method includes: An electronic device obtains a first image and a second image, and calculates a motion vector based on the first image and the second image. The first image and the second image are real frames of images. The electronic device creates an initial mesh Mesh of the second image, and determines a to-be-subdivided initial geometric figure corresponding to a static object in the initial Mesh. The initial geometric figure has exactly two subdivision points, located on sides of the initial geometric figure, and at most one subdivision point exists on each side of each initial geometric figure. The subdivision points are determined based on depth values of pixel points in the initial geometric figure, and are edge pixel points of the static object. The electronic device performs mesh subdivision on each initial geometric figure based on two subdivision points of the corresponding initial geometric figure, to obtain a target Mesh of the second image. In the target Mesh, a line connecting the two subdivision points of each initial geometric figure is a side of a target triangle, or a partial line segment on the line is a side of the target triangle. The target triangle is a geometric figure obtained by division in the target Mesh. The electronic device performs image warping on the second image based on the target Mesh and the motion vector, to generate a predicted frame of image corresponding to the first image and the second image.

The first image and the second image may be adjacent real frames of images in a video source.

For example, the first image and the second image may include only image information, or may include both image information and user interface information.

The subdivision point is used to subdivide the to-be-subdivided initial geometric figure corresponding to the static object in the initial Mesh, so that pixel depth information of each geometric figure is continuous after subdivision.

For example, the initial geometric figure may be a triangle, or may be a quadrilateral or a polygon.

This can avoid a local stretching problem in an image region with discontinuous depth values in the predicted frame of image, to better retain continuous graphic information, improve picture quality of the predicted frame of image, and improve user visual experience.

According to the first aspect, the initial Mesh is a quadrilateral Mesh, and the initial geometric figure is a quadrilateral. After the electronic device creates the initial Mesh of the second image, the method further includes: The electronic device normalizes the quadrilateral Mesh, to divide each quadrilateral into two triangles.

In this way, when the initial geometric figure obtained by division during Mesh creation is not a triangle, the Mesh is normalized, and each initial geometric figure is divided into triangles. This facilitates graphics calculation processing.

According to the first aspect or any implementation of the first aspect, the subdivision points of the to-be-subdivided quadrilateral are a first subdivision point and a second subdivision point, and the to-be-subdivided quadrilateral is divided into a first triangle and a second triangle.

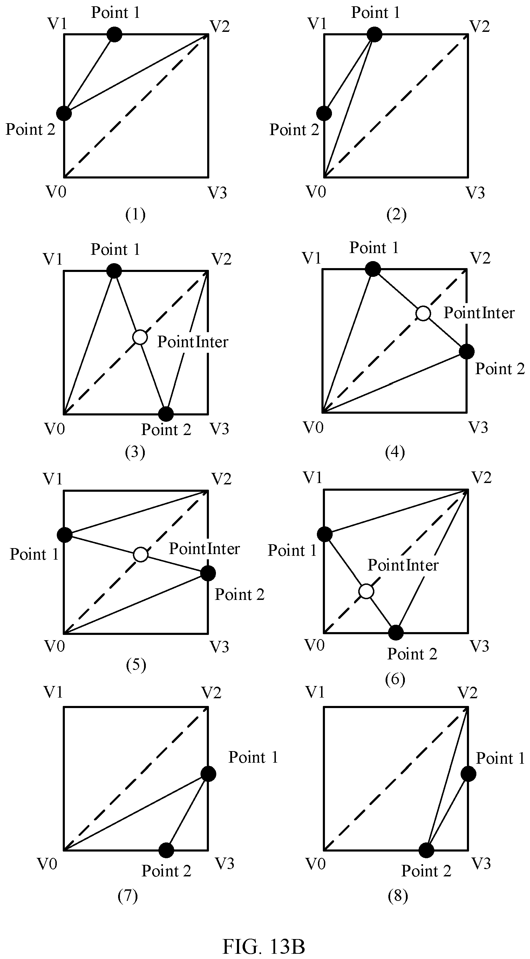

In the target Mesh,
the first triangle is subdivided into a first sub-triangle, a second sub-triangle, and a third sub-triangle. A common side of the first sub-triangle and the second sub-triangle is a line connecting the first subdivision point and the second subdivision point, and a common side of the second sub-triangle and the third sub-triangle is a line connecting the first subdivision point or the second subdivision point and a vertex of the first triangle (in this case, refer to cases shown in (1) and (2) in FIG. 13B). Alternatively,
the second triangle is subdivided into a fourth sub-triangle, a fifth sub-triangle, and a sixth sub-triangle. A common side of the fourth sub-triangle and the fifth sub-triangle is a line connecting the first subdivision point and the second subdivision point, and a common side of the fifth sub-triangle and the sixth sub-triangle is a line connecting the first subdivision point or the second subdivision point and a vertex of the second triangle (in this case, refer to cases shown in (7) and (8) in FIG. 13B). Alternatively,
the first triangle is subdivided into a seventh sub-triangle, an eighth sub-triangle, and a ninth sub-triangle, and the second triangle is subdivided into a tenth sub-triangle, an eleventh sub-triangle, and a twelfth sub-triangle. A common side of the seventh sub-triangle and the eighth sub-triangle is a line connecting the first subdivision point and a third point, and a common side of the eighth sub-triangle and the ninth sub-triangle is a line connecting the first subdivision point and a vertex of the first triangle. A common side of the tenth sub-triangle and the eleventh sub-triangle is a line connecting the second subdivision point and the third point, and a common side of the eleventh sub-triangle and the twelfth sub-triangle is a line connecting the second subdivision point and a vertex of the second triangle. The line connecting the first subdivision point and the second subdivision point intersects with a common side of the first triangle and the second triangle at the third point (in this case, refer to cases shown in (3) to (6) in FIG. 13B).

The first triangle may be separately subdivided based on the subdivision points, or may not be subdivided, or may be subdivided together with the second triangle based on the subdivision points. In this way, in the target Mesh, depth values of pixel points in each sub-triangle obtained by division are continuous. In this way, a geometric figure is not stretched and deformed during image warping in each sub-triangle obtained by subdivision. This avoids a local stretching problem in an image region with discontinuous depth values in the predicted frame of image, and can better retain continuous graphic information.

According to the first aspect or any implementation of the first aspect, the method further includes: The electronic device sets depth information of each triangle in the target Mesh.

In this way, the electronic device may perform image warping with reference to pixel depth information, to ensure a correct depth order between different objects in the predicted frame of image.

According to the first aspect or any implementation of the first aspect, that the electronic device performs image warping on the second image based on the target Mesh and the motion vector may include: For each triangle in the target Mesh, the electronic device determines a motion vector of each vertex of the triangle, and moves the triangle based on the motion vector of each vertex of the triangle. When each triangle moves to a target position, the electronic device determines a coverage relationship between the triangle and another triangle at the target position based on depth information of the triangle and depth information of the another triangle at the target position.

In this way, when moving a triangle based on a motion vector, the electronic device may determine a coverage relationship between the triangle and another triangle based on depth information of the triangle, to ensure a correct depth order between different objects in the predicted frame of image.

According to the first aspect or any implementation of the first aspect, the subdivision points of the to-be-subdivided quadrilateral are a first subdivision point and a second subdivision point, and the to-be-subdivided quadrilateral is divided into a first triangle and a second triangle. That the electronic device performs mesh subdivision on the initial geometric figure based on the two subdivision points of the initial geometric figure may include: The electronic device performs mesh subdivision on the first triangle and/or the second triangle according to a matched mesh subdivision policy based on a position relationship between each of the first subdivision point and the second subdivision point and each of the first triangle and the second triangle.

The electronic device may perform mesh subdivision on only the first triangle, or perform mesh subdivision on only the second triangle, or perform mesh subdivision on the first triangle and the second triangle together based on the position relationship between each of the first subdivision point and the second subdivision point and each of the first triangle and the second triangle and the second triangle.

According to the first aspect or any implementation of the first aspect, that the electronic device performs mesh subdivision on the first triangle and/or the second triangle according to a matched mesh subdivision policy based on a position relationship between each of the first subdivision point and the second subdivision point and each of the first triangle and the second triangle may include: When a horizontal coordinate of the first subdivision point is equal to horizontal coordinates of a first vertex and a second vertex of the first triangle, and a vertical coordinate of the second subdivision point is equal to vertical coordinates of the second vertex and a third vertex of the first triangle, the electronic device connects the first subdivision point and the second subdivision point, and connects the first subdivision point and the third vertex of the first triangle or connects the second subdivision point and the first vertex of the first triangle, to subdivide only the first triangle into three triangles.

In this case, the electronic device performs mesh subdivision on only the first triangle based on the first subdivision point and the second subdivision point, and does not perform mesh subdivision on the second triangle. In this case, reference may be made to cases shown in (1) and (2) in FIG. 13B.

According to the first aspect or any implementation of the first aspect, that the electronic device performs mesh subdivision on the first triangle and/or the second triangle according to a matched mesh subdivision policy based on a position relationship between each of the first subdivision point and the second subdivision point and each of the first triangle and the second triangle may include:

When a horizontal coordinate of the first subdivision point is equal to horizontal coordinates of a first vertex and a second vertex of the second triangle, and a vertical coordinate of the second subdivision point is equal to vertical coordinates of the second vertex and a third vertex of the second triangle, the electronic device connects the first subdivision point and the second subdivision point, and connects the first subdivision point and the third vertex of the second triangle or connects the second subdivision point and the first vertex of the second triangle, to subdivide only the second triangle into three triangles.

In this case, the electronic device performs mesh subdivision on only the second triangle based on the first subdivision point and the second subdivision point, and does not perform mesh subdivision on the first triangle. In this case, reference may be made to cases shown in (7) and (8) in FIG. 13B.

According to the first aspect or any implementation of the first aspect, that the electronic device performs mesh subdivision on the first triangle and/or the second triangle according to a matched mesh subdivision policy based on a position relationship between each of the first subdivision point and the second subdivision point and each of the first triangle and the second triangle includes:

When a vertical coordinate of the first subdivision point is equal to vertical coordinates of a second vertex and a third vertex of the first triangle, and a vertical coordinate of the second subdivision point is equal to vertical coordinates of a second vertex and a third vertex of the second triangle, the electronic device connects the first subdivision point and the second subdivision point, connects the first subdivision point and a first vertex of the first triangle, and connects the second subdivision point and a first vertex of the second triangle, to subdivide each of the first triangle and the second triangle into three triangles (in this case, refer to a case shown in (3) in FIG. 13B).

When a horizontal coordinate of the first subdivision point is equal to horizontal coordinates of the first vertex and the second vertex of the first triangle, and a horizontal coordinate of the second subdivision point is equal to horizontal coordinates of the first vertex and the second vertex of the second triangle, the electronic device connects the first subdivision point and the second subdivision point, connects the first subdivision point and the third vertex of the first triangle, and connects the second subdivision point and the third vertex of the second triangle, to subdivide each of the first triangle and the second triangle into three triangles (in this case, refer to a case shown in (5) in FIG. 13B).

When the vertical coordinate of the first subdivision point is equal to the vertical coordinates of the second vertex and the third vertex of the first triangle, and the horizontal coordinate of the second subdivision point is equal to the horizontal coordinates of the first vertex and the second vertex of the second triangle, the electronic device connects the first subdivision point and the second subdivision point, connects the first subdivision point and the first vertex of the first triangle, and connects the second subdivision point and the third vertex of the second triangle, to subdivide each of the first triangle and the second triangle into three triangles (in this case, refer to a case shown in (4) in FIG. 13B).

When the horizontal coordinate of the first subdivision point is equal to the horizontal coordinates of the first vertex and the second vertex of the first triangle, and the vertical coordinate of the second subdivision point is equal to the vertical coordinates of the second vertex and the third vertex of the second triangle, the electronic device connects the first subdivision point and the second subdivision point, connects the first subdivision point and the third vertex of the first triangle, and connects the second subdivision point and the first vertex of the second triangle, to subdivide each of the first triangle and the second triangle into three triangles (in this case, refer to a case shown in (6) in FIG. 13B).

In the foregoing four cases, the electronic device may perform mesh subdivision on the first triangle and the second triangle together based on the first subdivision point and the second subdivision point, so that depth values of pixel points in each triangle obtained by subdivision are continuous.

According to the first aspect or any implementation of the first aspect, that the electronic device determines a to-be-subdivided initial geometric figure corresponding to a static object in the initial Mesh may include: The electronic device determines an initial geometric figure corresponding to the static object in the initial Mesh. The electronic device determines subdivision points of each initial geometric figure. The electronic device uses an initial geometric figure that has two subdivision points and in which at most one subdivision point exists on each side as the to-be-subdivided initial geometric figure.

According to the first aspect or any implementation of the first aspect, that the electronic device determines subdivision points of the initial geometric figure may include: The electronic device determines each edge pixel point in the initial geometric figure. A depth value of the edge pixel point falls within a preset range, and a difference between the depth value of the edge pixel point and a depth value of a surrounding pixel point exceeds a preset threshold. The electronic device uses the edge pixel point on a side of the initial geometric figure as the subdivision point of the initial geometric figure.

In this way, a subdivision point is determined from edge pixel points of a static object in an image, so that depth values of pixel points in a triangle obtained by subdivision are continuous.

According to the first aspect or any implementation of the first aspect, the first image and the second image are rendered images.

Because the first image and the second image are rendered images, the predicted frame of image calculated based on the first image and the second image is a rendered image. This halves rendering at a same frame rate, to greatly reduce power consumption of the electronic device and reduce heat generation of the electronic device.

According to the first aspect or any implementation of the first aspect, that the electronic device obtains a first image and a second image may include: The electronic device obtains a first resource image, and separates user interface UI information from the first resource image, to obtain the first image. The electronic device obtains a second resource image, and separates UI information from the second resource image, to obtain the second image. After the electronic device generates the predicted frame of image corresponding to the first image and the second image, the method further includes: The electronic device performs image completion on the predicted frame of image, and fuses a predicted frame of image obtained by completion with the UI information, to obtain a target predicted frame of image.

A resource image includes image information and UI information.

The UI information separated from the first resource image may be the same as or different from the UI information separated from the second resource image.

When the UI information separated from the first resource image is different from the UI information separated from the second resource image, the electronic device fuses the second predicted frame of image with the UI information corresponding to the second resource image, to obtain the target predicted frame of image. The second resource image is a current frame resource image, and the first resource image is a previous frame resource image of the current frame resource image.

In this way, the electronic device separates UI information from the resource images and then calculates the predicted frame of image. This can effectively reduce an image data processing amount and improve accuracy of information about the predicted frame of image.

According to the first aspect or any implementation of the first aspect, the first resource image and the second resource image are resource images in a game application.

In a game frame interpolation scenario, an image scene is complex and includes a large quantity of static objects (for example, various buildings), and a depth difference of the static objects in the scene is large (that is, depth values of different static objects are discontinuous). In addition, because games are mostly set in a virtual world, when a user plays a mobile game, an operation of the user often causes a significant shift in a game scene, which does not follow a physical rule like object movement in a physical world. Therefore, in a complex game scene, a significant shift in the scene may cause big movements of only some objects in the image, rather than big movements of all objects in the image. In other words, in the game scene, MV images calculated based on consecutive real frames of images are distributed unevenly. In particular, in an image region in which depth information varies greatly, MV values also vary greatly. In the game frame interpolation scenario, when the electronic device calculates a predicted frame of image based on MVs, an edge region of a static object with discontinuous depth values may be distorted in the predicted frame of image.

In the technical solution provided in this embodiment of this application, an edge region of a static object in a game image is identified based on depth values of pixels, Mesh geometric subdivision is performed on the edge region based on depth information of pixel points, and image warping is performed in a Mesh geometric figure obtained by subdivision, to resolve distortion in an edge region of a static object in a predicted frame of image in the game scene, and improve user game experience.

According to a second aspect, an embodiment of this application provides an electronic device. The electronic device includes one or more processors, a memory, and one or more computer programs. The one or more computer programs are stored in the memory, and when the computer program is executed by the one or more processors, the electronic device is enabled to perform the image processing method according to the first aspect and any implementation of the first aspect.

The second aspect and any implementation of the second aspect correspond to the first aspect and any implementation of the first aspect respectively. For technical effects corresponding to the second aspect and any implementation of the second aspect, refer to the technical effects corresponding to the first aspect and any implementation of the first aspect. Details are not described herein again.

According to a third aspect, an embodiment of this application provides a computer-readable storage medium. The computer-readable storage medium includes a computer program. When the computer program is run on an electronic device, the electronic device is enabled to perform the image processing method according to the first aspect and any implementation of the first aspect.

The third aspect and any implementation of the third aspect correspond to the first aspect and any implementation of the first aspect respectively. For technical effects corresponding to the third aspect and any implementation of the third aspect, refer to the technical effects corresponding to the first aspect and any implementation of the first aspect. Details are not described herein.

According to a fourth aspect, an embodiment of this application provides a computer program product, including a computer program. When the computer program is run, a computer is enabled to perform the image processing method according to the first aspect or any implementation of the first aspect.

The fourth aspect and any implementation of the fourth aspect correspond to the first aspect and any implementation of the first aspect respectively. For technical effects corresponding to the fourth aspect and any implementation of the fourth aspect, refer to the technical effects corresponding to the first aspect and any implementation of the first aspect. Details are not described herein again.

According to a fifth aspect, this application provides a chip. The chip includes a processing circuit and a transceiver pin. The transceiver pin and the processing circuit communicate with each other through an internal connection path. The processing circuit performs the image processing method according to the first aspect or any implementation of the first aspect to control a receive pin to receive a signal and control a transmit pin to transmit a signal.

The fifth aspect and any implementation of the fifth aspect correspond to the first aspect and any implementation of the first aspect respectively. For technical effects corresponding to the fifth aspect and any implementation of the fifth aspect, refer to the technical effects corresponding to the first aspect and any implementation of the first aspect. Details are not described herein again.

### BRIEF DESCRIPTION OF DRAWINGS

FIG. 1A is a diagram of an example of frame interpolation modes;
FIG. 1B is a diagram of an example of frame interpolation of predicted frames;
FIG. 2 is a diagram of an example of a generation procedure of a predicted frame of image;
FIG. 3 is a diagram of an example of image meshing;
FIG. 4 is an example of a depth image;
FIG. 5 is a diagram of an example of an application scenario;
FIG. 6 is a diagram of an example of warping on an image mesh;
FIG. 7 is a diagram of an example of a hardware structure of an electronic device;
FIG. 8 is a diagram of an example of a software structure of an electronic device;
FIG. 9 is a diagram of an example of module interaction in an image processing method;
FIG. 10 is a diagram of an example of an image warping procedure;
FIG. 11 is a diagram of an example of mesh normalization;
FIG. 12 is a flowchart of an example of subdivision point determining;
FIG. 13A is a diagram of an example of distribution of subdivision points;
FIG. 13B is a diagram of an example of mesh subdivision;
FIG. 14 is a diagram of an example of mesh movement;
FIG. 15A is a diagram of an example of an application scenario; and
FIG. 15B is a diagram of an example of an application scenario.

### DESCRIPTION OF EMBODIMENTS

The technical solutions in embodiments of this application are clearly and completely described in the following with reference to the accompanying drawings in embodiments of this application. Apparently, the described embodiments are merely some rather than all of embodiments of this application. All other embodiments obtained by a person of ordinary skill in the art based on embodiments of this application without making creative efforts shall fall within the protection scope of this application.

The term "and/or" used herein describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects but do not indicate a particular order of the objects. For example, a first target object and a second target object are intended to distinguish between different target objects, but do not indicate a particular order of the target objects.

In the embodiments of this application, the term "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term "example" or "for example" is intended to present a related concept in a specific manner.

In the description of embodiments of this application, unless otherwise stated, "a plurality of" means two or more than two. For example, a plurality of processing units refer to two or more processing units; and a plurality of systems refer to two or more systems.

With development of electronic technologies, refresh rates of screens of intelligent terminals are increasingly high, as are frame rates of video sources, and memory usage and rendering power consumption in the intelligent terminal also increase accordingly. However, due to limitations of power consumption or CPU and GPU capabilities of the intelligent terminal, a high refresh rate and a high frame rate often cause overheating or lagging of the intelligent terminal. This affects user experience.

A mobile game is used as an example. With development and promotion of large-scale mobile games, rendering pipelines of modern mobile games are increasingly complex, and resource loads are also increasing. In addition, computational power growth of modern intelligent terminals does not meet a requirement of the modern large-scale mobile games, and the intelligent terminals are constrained by a limited battery capacity and a limited thermal management capability. Therefore, developers focus on how to reduce unnecessary rendering overheads, improve a limited frame rate and smoothness, and reduce heat generation while ensuring that game picture quality is not significantly affected.

To improve user experience, developers often reduce a frame rate of a video source, and then increase a video frame rate by using a video frame interpolation technology, to halve rendering at a same frame rate. This greatly reduces power consumption of an intelligent terminal and reduces heat generation of the intelligent terminal.

The video frame interpolation technology aims to improve a frame rate and smoothness of a video, making the video "buttery smooth". As long as a predicted frame (or referred to as an intermediate frame or a transition frame) is interpolated between adjacent real frames (or referred to as original frames), a frame rate of the video can be doubled. Picture quality of the predicted frame is directly related to smoothness of the video. A motion direction and a speed of each object in an image are calculated by using image information of two adjacent real frames, and each object in the image is correspondingly moved, so that a predicted frame can be obtained.

As the name implies, a real frame is a raw image frame in a video source, and is not an image frame generated by prediction. For example, the real frame may be an image frame drawn by a developer during development of an application such as a game, or may be an image frame captured by an image acquisition device (such as a camera) during video production.

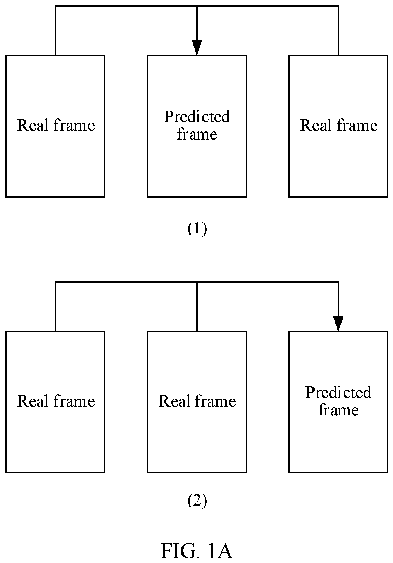

Refer to FIG. 1A. Video frame interpolation modes may include predicted frame interpolation and predicted frame extrapolation. In the predicted frame interpolation mode, as shown in (1) in FIG. 1A, a predicted frame of image is calculated based on two adjacent real frames of images, and the predicted frame of image is interpolated between the two real frames of images, to improve a video frame rate. In the predicted frame extrapolation mode, as shown in (2) in FIG. 1A, a predicted frame of image is calculated based on two adjacent real frames of images, and the predicted frame of image is extrapolated after the two real frames of images and is used as a next frame of image, to improve a video frame rate.

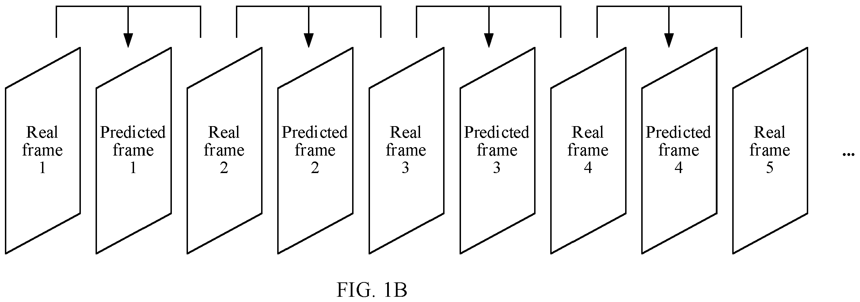

The predicted frame interpolation mode is used as an example. Refer to FIG. 1B. A predicted frame 1 is calculated based on a real frame 1 and a real frame 2, and the predicted frame 1 is interpolated between the real frame 1 and the real frame 2. A predicted frame 2 is calculated based on the real frame 2 and a real frame 3, and the predicted frame 2 is interpolated between the real frame 2 and the real frame 3. A predicted frame 3 is calculated based on the real frame 3 and a real frame 4, and the predicted frame 3 is interpolated between the real frame 3 and the real frame 4, and so on. In this way, a video frame rate is improved in the predicted frame interpolation mode, so that a static object and moving of a dynamic object are transited more smoothly, and a picture is smoother.

The following briefly describes a process of generating a predicted frame by using a game scene as an example. It should be noted that all related accompanying drawings shown in the embodiments are shown in a grayscale image form.

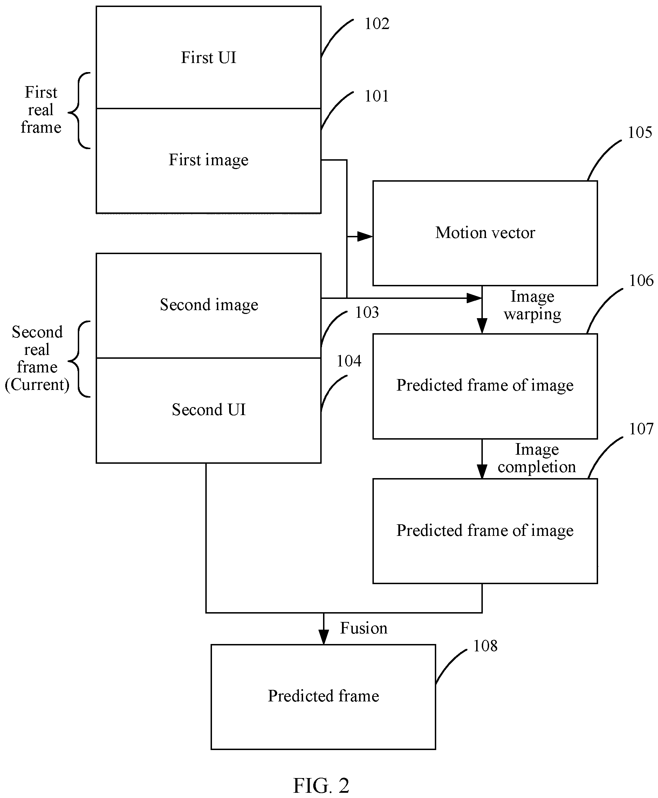

As shown in FIG. 2, a first real frame and a second real frame are two adjacent image frames in a game application. It is assumed that the second real frame is a current image frame, and the first real frame is a previous image frame of the second real frame. Based on this, an intelligent terminal may calculate a predicted frame based on the first real frame and the second real frame. The predicted frame interpolation mode is used as an example. The intelligent terminal may interpolate the calculated predicted frame between the two real frames for displaying, to improve a frame rate of a game video, and halve rendering at a same frame rate.

In this game application, a real frame includes image information and UI (User Interface, user interface) information. The image information may be understood as picture information in a video source, and the UI information is overall design information of human-computer interaction, operation logic, and interface aesthetics of software. When the intelligent terminal calculates the predicted frame based on the adjacent real frames, because the interface UI information does not change, the intelligent terminal may first separate the image information and the UI information, and calculate the predicted frame based on only the image information, to reduce an image data processing amount and improve accuracy of the predicted frame. Therefore, as shown in FIG. 2, when calculating the predicted frame, the intelligent terminal may first extract a first image 101 and a first UI 102 from the first real frame, extract a second image 103 and a second UI 104 from the second real frame, and then perform an image prediction operation based on the first image 101 and the second image frame, to obtain a predicted frame of image 107.

Still refer to FIG. 2. When calculating the predicted frame of image 107, the intelligent terminal may first calculate a motion vector (Motion Vector, MV) 105 of the first image 101 and the second image 103, and perform image warping (Warping) on the second image 103 based on the motion vector 105, to obtain a predicted frame of image 106. The image warping means changing a position of an image pixel by using a specific transformation, for example, a translation transformation, a rotation transformation, a scale transformation, an affine transformation, a perspective transformation, or a columnar transformation.

The image warping can better ensure continuous movement of objects in an image. However, because the objects in the image move at different speeds, image information overlapping or image information missing may occur in the predicted frame of image 106 obtained by image warping. The intelligent terminal further needs to perform image completion (Blur) on the predicted frame of image 106, to obtain the predicted frame of image 107. In this case, the intelligent terminal fuses the second UI 104 and the predicted frame of image 107, to obtain a predicted frame 108 calculated based on the first real frame and the second real frame.

It should be noted that, regardless of image warping or UI information fusion, information in the current real frame may be used as a reference. Certainly, the image warping and the UI information fusion may also be performed based on information in a previous frame of the current real frame. This is not limited in this embodiment.

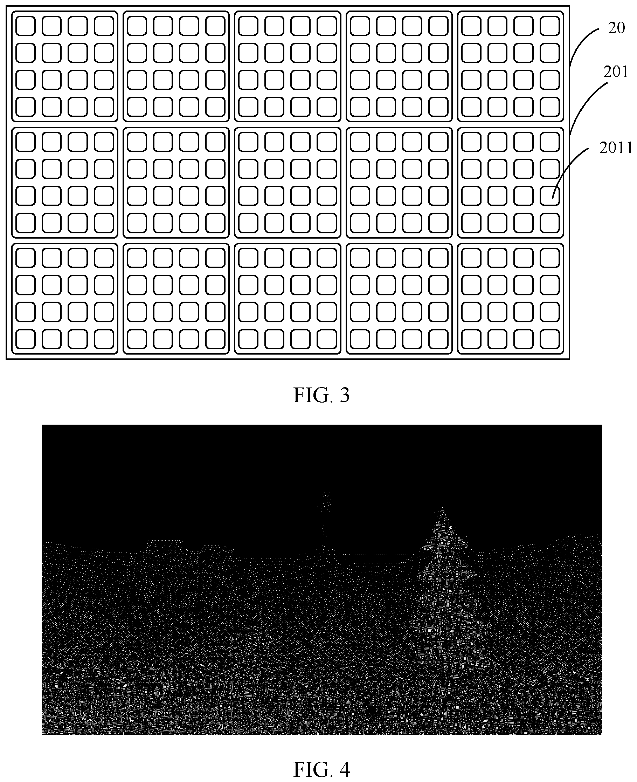

In computer graphics, a mesh (Mesh) geometry is usually used as a basic unit for image processing. Similarly, in the foregoing image warping phase, the intelligent terminal also performs image warping by using the mesh geometry as a basic unit. In other words, the intelligent terminal performs image warping by forming a triangular or quadrilateral geometric group in the image. A quadrilateral mesh is used as an example. As shown in FIG. 3, an image frame 20 is a global working group. The image frame 20 may be divided into a plurality of quadrilaterals 201, and each quadrilateral 201 includes a plurality of pixel points 2011. Each quadrilateral 201 is a local working group, and is a basic unit for image warping by the intelligent terminal.

However, each object displayed in an image carries depth information. Therefore, depth values of pixels in the image are different. A depth value of a pixel point is a vertical distance (a depth) from an image collector (for example, a camera) to this point in an image scene, and is a floating point number ranging from 0 to 1. FIG. 4 shows an example of a depth image (depth image). The depth image is an image in which a vertical distance (a depth) from an image collector to a point in a scene is used as a pixel value. Because a depth value is only a floating point number, each pixel in the depth image needs to store only a floating point value of a r (red) channel. Therefore, the depth image we see is red and black (shown in the grayscale image form in FIG. 4). For example, as shown in FIG. 4, an object closer to the image collector corresponds to a redder region on the depth image (a depth value is closer to 1), and an object further from the image collector corresponds to a blacker region on the depth image (a depth value is closer to 0). In other words, depth values from 0 to 1 represent distances of objects from far to near to the image collector.

In an image region with discontinuous depth values of pixels, for example, in a geometric figure in a Mesh, depth values of pixel points are discontinuous. Using the geometric figure as a basic unit for image warping causes a local stretching problem in an image, and even a problem that depth information of objects is abnormal. This causes distortion of a picture of a predicted frame of image, and further causes a large difference between a predicted frame and a real frame. User visual experience is poor. For example, in a geometric figure of an image Mesh, if a difference between a depth value of a pixel point and a depth value of a pixel around the pixel point is greater than a specified threshold, depth values of pixels in the geometric figure are discontinuous.

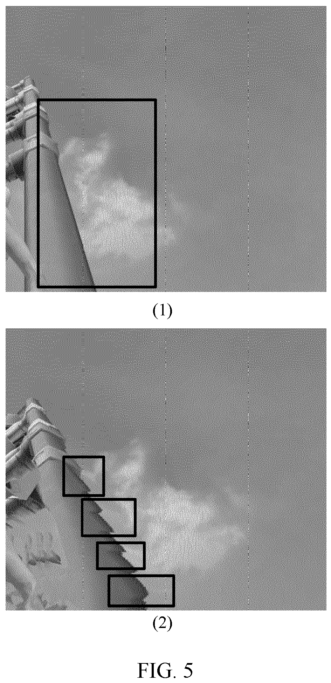

FIG. 5 is a diagram of a comparison between a real frame and a predicted frame. In an image scene shown in FIG. 5, an edge region of a pillar in an image is a region with discontinuous depth values, and a depth value of a pixel point in a pillar region is obviously greater than a depth value of a pixel point in a sky region. In a real frame shown in (1) in FIG. 5, an edge of the pillar in the image is straight, and in a predicted frame shown in (2) in FIG. 5, a local stretching problem occurs at the edge of the pillar in the image, and a depth value of a pixel point in a part of the sky region is greater than a depth value of a pixel point in the pillar region (that is, the sky is closer to an image collector than the pillar, and depth information of the objects is abnormal). In this way, the predicted frame of image is distorted, and greatly differs from the real frame.

Therefore, in the predicted frame generated by image warping, a local stretching problem, even a problem that depth information of the object is abnormal, occurs in an image region with discontinuous depth values. The predicted frame greatly differs from a real scene. Consequently, user visual experience is poor.

To resolve the foregoing problem, embodiments of this application provide an image processing method. In this method, for an image region with discontinuous depth values, an intelligent terminal subdivides an image mesh based on depth information of pixel points, and performs image warping in an image Mesh geometry obtained by subdivision. This resolves a local stretching problem in an image region with discontinuous depth values in a predicted frame of image, to better retain continuous graphic information, improve picture quality of the predicted frame of image, and improve user visual experience.

In addition, when performing image warping in the image Mesh geometry obtained by subdivision, the intelligent terminal further performs related processing with reference to the depth information of pixel points, so that objects in a predicted frame of image can maintain a correct depth relationship, to avoid a problem that depth information of objects is abnormal.

The image processing method provided in embodiments of this application is applicable to an image frame interpolation scenario with a large depth information difference, for example, a game frame interpolation scenario.

As is known to all, in a mobile game, an image scene is complex and includes a large quantity of static objects (for example, various buildings), and depths of the static objects in the scene vary greatly (that is, depth values of different static objects are discontinuous). In addition, because games are mostly set in a virtual world, when a user plays a mobile game, an operation of the user often causes a significant shift in a game scene, which does not follow a physical rule like object movement in a physical world. Therefore, in a complex game scene, a significant shift in the scene may cause big movements of only some objects in the image, rather than big movements of all objects in the image. In other words, in the game scene, MV images calculated based on consecutive real frames of images are distributed unevenly. In particular, in an image region in which depth information varies greatly, MV values also vary greatly.

Therefore, in the game frame interpolation scenario, when the electronic device calculates a predicted frame of image based on MVs, an edge region of a static object with discontinuous depth values may be distorted in the predicted frame of image.

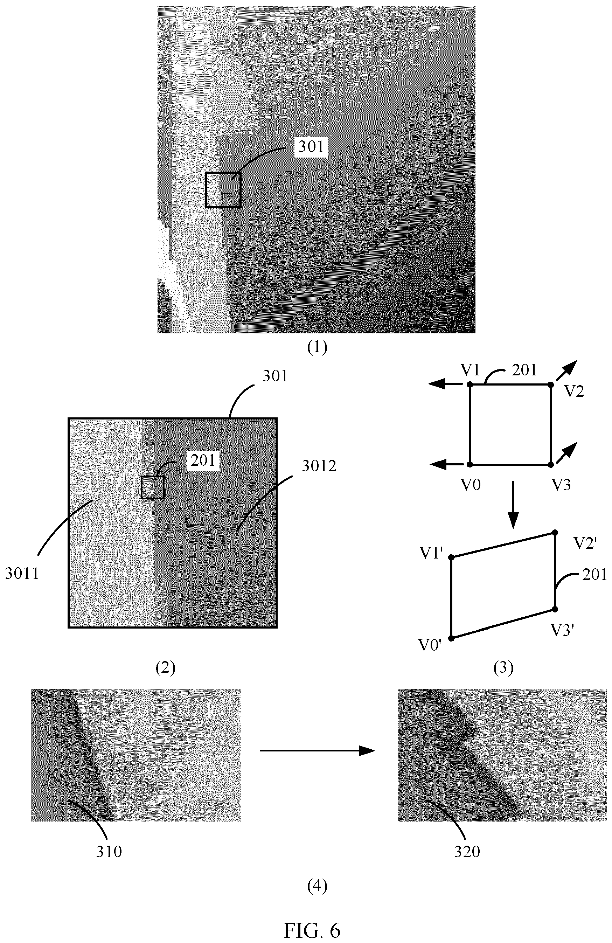

(1) in FIG. 6 shows an example of a grayscale image of a motion vector frame calculated based on a game image. In the grayscale image shown in (1) in FIG. 6, a region with a lighter grayscale (a grayscale value is closer to 1) has a smaller motion vector, and a region with a deeper grayscale (a grayscale value is closer to 0) has a larger motion vector. Still refer to (1) in FIG. 6. Motion vectors on left and right sides of an edge region of a static object in the image frame change greatly. With reference to (1) and (2) in FIG. 6, a region 301 is used as an example. A sub-region 3011 corresponds to a pillar region in the image, a sub-region 3012 corresponds to a sky region in the image, and a motion vector corresponding to the pillar is smaller than a motion vector corresponding to the sky. In other words, motion vector values on the left and right sides of the edge region of the pillar change greatly. In this case, once a difference between motion vectors corresponding to different pixel regions in a same image Mesh geometry is large, image warping performed on the Mesh geometry based on the motion vectors inevitably causes severe deformation of a Mesh geometric figure, even some Mesh geometric figures overlap, and correctness of object depth information in the image cannot be ensured. As shown in (3) in FIG. 6, in four vertexes of a Mesh geometric figure 201, motion vectors corresponding to V0 and V1 greatly differ from motion vectors corresponding to V2 and V3. After each vertex is moved based on a motion vector corresponding to each vertex, the Mesh geometric figure 201 is twisted into a Mesh geometric figure 201'. The Mesh geometric figure not only severely deforms, but also may cover another Mesh geometric figure. In this way, a partial region of a predicted frame of image is distorted, and in particular, an edge region of a static object (that is, a pixel region with discontinuous depth values) is distorted, as shown in (4) in FIG. 6.

In the technical solution provided in embodiments of this application, an edge region of a static object in a game image is identified based on depth values of pixels, Mesh geometric subdivision is performed on the edge region based on depth information of pixel points, and image warping is performed in a Mesh geometric figure obtained by subdivision, to resolve distortion in an edge region of a static object in a predicted frame of image in the game scene, and improve user game experience.

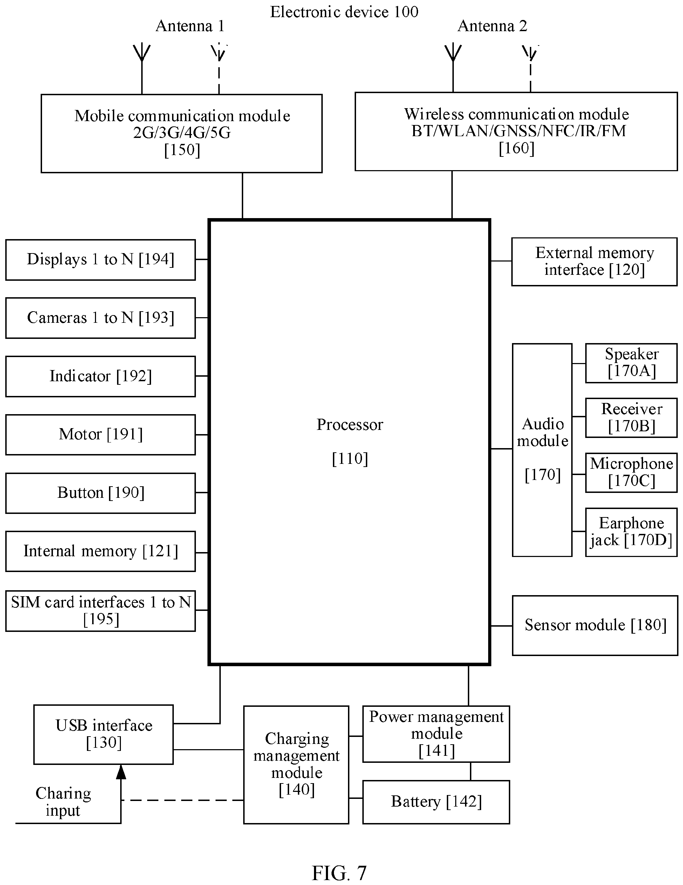

FIG. 7 is a diagram of a structure of an electronic device 100. Optionally, the electronic device 100 may be a terminal, or may be referred to as a terminal device or an intelligent terminal. The terminal may be a device such as a cellular phone (cellular phone) or a pad computer (pad). This is not limited in this application. It should be understood that the electronic device 100 shown in FIG. 7 is only an example of the electronic device, and the electronic device 100 may have more or fewer components than those shown in the figure, may combine two or a plurality of components, or may have a different component configuration. The components shown in FIG. 6 may be implemented by hardware that includes one or more signal processors and/or application-specific integrated circuits, software, or a combination of hardware and software.

The electronic device 100 may include: a processor 110, an external memory interface 120, an internal memory 121, a universal serial bus (universal serial bus, USB) interface 130, a charging management module 140, a power management unit 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor, a gyroscope sensor, an acceleration sensor, a temperature sensor, a motion sensor, a barometric pressure sensor, a magnetic sensor, a distance sensor, an optical proximity sensor, a fingerprint sensor, and a touch sensor, an ambient light sensor, a bone conduction sensor, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may also be disposed in the processor 110, and is configured to store instructions and data. In some embodiments the memory in processor 110 is a cache memory.

The USB interface 130 is an interface that complies with the USB standard specification, and may be specifically a Mini USB interface, a Micro USB interface, a USB Type C interface, and the like. The USB interface 130 may be configured to connect to a charger to charge the electronic device 100, or may be configured to transfer data between the electronic device 100 and a peripheral device, or may be configured to connect to a headset for playing audio by using the headset. The interface may be further configured to connect to another electronic device such as an AR device.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to be connected to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antennas may be used with a tuning switch.

The mobile communication module 150 may provide a wireless communication solution that is applied to the electronic device 100 and that includes 2G/3G/4G/5G. The mobile communication module 150 may include at least one filter, a switch, a power amplifier, a low noise amplifier (low noise amplifier, LNA), and the like.

The wireless communication module 160 may provide a wireless communication solution that is applied to the electronic device 100 and that includes a wireless local area network (wireless local area network, WLAN) (such as a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared (infrared, IR) technology, and the like.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology.

The electronic device 100 may implement a display function by using the GPU, the display 194, the application processor, and the like. The GPU is a microprocessor for image processing and connects the display 194 and the application processor. The GPU is configured to perform mathematical and geometric computation, and render an image. The processor 110 may include one or more GPUs that execute program instructions to generate or change display information.

In embodiments of this application, when generating a predicted frame of image, the GPU may subdivide an image mesh, and perform image warping based on the subdivided image mesh, to generate the predicted frame of image according to the image processing method provided in embodiments of this application. The GPU may further perform image completion on the predicted frame to implement quick completion on the predicted frame of image.

The display 194 is configured to display an image, a video, and the like. The display 194 includes a display panel. In some embodiments, the electronic device 100 may include one or N displays 194, where N is a positive integer greater than 1.

The electronic device 100 may implement a photographing function by using the camera 193, the ISP, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP, to convert the electrical signal into a digital image signal. The ISP outputs the digital image signal to the DSP for processing. The DSP converts the digital image signal into an image signal in a standard format such as RGB or YUV. In some embodiments, the electronic device 100 may include 1 or N cameras 193, where N is a positive integer greater than 1.

The external memory interface 120 may be configured to connect to an external storage card such as a Micro SD card, to expand a storage capability of the electronic device 100. The external memory card communicates with the processor 110 through the external memory interface 120, to implement a data storage function.

The internal memory 121 may be configured to store computer-executable program code. The executable program code includes instructions. The processor 110 runs the instructions stored in the internal memory 121, to implement various functional applications and data processing of the electronic device 100. For example, the electronic device 100 is enabled to implement the image processing method in embodiments of this application. The internal memory 121 may include a program storage area and a data storage area. The program storage area may store an operating system, an application required by at least one function (such as a voice playing function and an image playing function), and the like. The data storage region may store data (for example, audio data and an address book) and the like created when the electronic device 100 is used. In addition, the internal memory 121 may include a highspeed random access memory, and may further include a non-volatile memory, for example, at least one disk storage device, a flash memory device, or a universal flash storage (universal flash storage, UFS).

The electronic device 100 may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode by using the speaker 170A. In some embodiments, the electronic device 100 may be provided with a plurality of speakers 170A.

The receiver 170B, also referred to as an "earpiece", is configured to convert an electrical audio signal into a sound signal. When a call is answered or audio information is received by using the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to acquire a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor is configured to sense a pressure signal, and may convert the pressure signal into an electrical signal. In some embodiments, the pressure sensor may be disposed in the display 194. The electronic device 100 may further calculate a position of the touch based on a detection signal of the pressure sensor.

The gyroscope sensor may be configured to determine a motion posture of the electronic device 100. In some embodiments, an angular velocity of the electronic device 100 around three axes (namely, axes x, y, and z) may be determined by using the gyroscope sensor.

The acceleration sensor may detect an acceleration value of the electronic device 100 in each direction (generally three axes). When the electronic device 100 is stationary, the acceleration sensor may detect a magnitude and a direction of gravity. The acceleration sensor may be further configured to recognize a posture of the electronic device, and is applied to switching between landscape orientation and portrait orientation, and applied to an application such as a pedometer.

The touch sensor is also referred to as a "touch panel". The touch sensor may be disposed on the display 194. The touch sensor and the display 194 form a touchscreen, which is also referred to as a "touch screen". The touch sensor is configured to detect a touch operation performed on or near the touch sensor. The touch sensor may transfer the detected touch operation to the application processor to determine a type of the touch event.

The button 190 includes a power button (or referred to as a power-on button), a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photo taking and audio playing) may correspond to different vibration feedback effects.

The indicator 192 may be an indicator light, and may be configured to indicate a charging status and a power change, or may be configured to indicate a message, a missed call, a notification, and the like.

A software system of the electronic device 100 may use a layered architecture, an event-driven architecture, a micro core architecture, a micro service architecture, or a cloud architecture. In this embodiment of this application, the software structure of the electronic device 100 is illustrated by using an Android system with a layered architecture as an example.

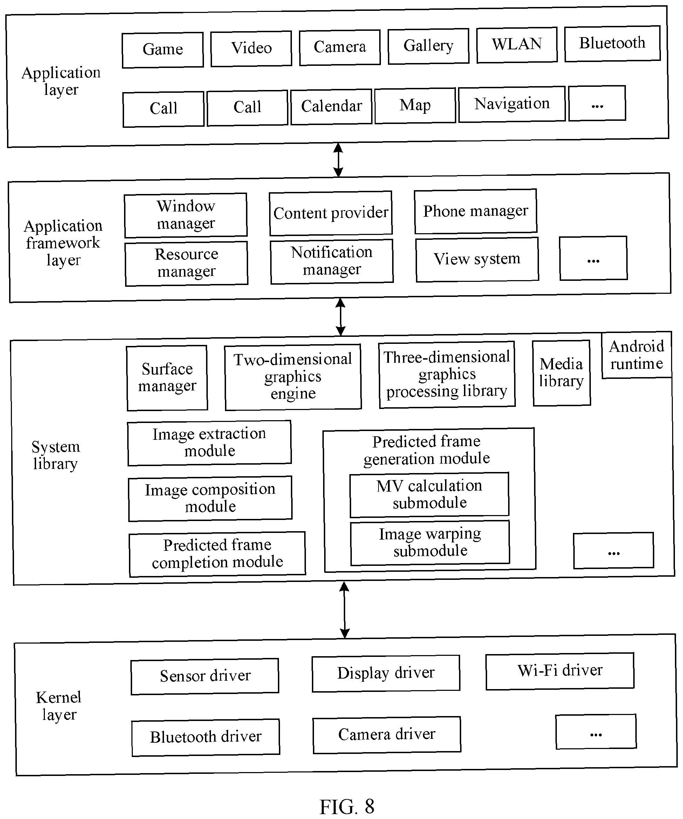

FIG. 8 is a block diagram of the software structure of the electronic device 100 in this embodiment of this application.

In a layered architecture of the electronic device 100, software is divided into several layers, and each layer has a clear role and task. The layers communicate with each other through a software interface. In some embodiments, the Android system is divided into four layers, namely, an application layer, an application framework layer, an Android runtime (Android Runtime) and system library, and a kernel layer from top to bottom.

The application layer may include a series of application packages.

As shown in FIG. 8, the application packages may include applications such as Game, Video, Camera, Gallery, WLAN, Bluetooth, Call, Calendar, Map, and Navigation.

The application framework layer provides an application programming interface (application programming interface, API) and a programming framework for applications at the application layer. The application framework layer includes some predefined functions.

As shown in FIG. 8, the application framework layer may include a window manager, a content provider, a view system, a phone manager, a resource manager, a notification manager, and the like.

The window manager is configured to manage a window application. The window manager may obtain a size of the display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and a bookmark, an address book, and the like.

The phone manager is configured to provide a communication function for the electronic device 100, for example, call state management (including getting through, hang-up, and the like).

The resource manager provides various resources such as a localized character string, an icon, an image, a layout file, and a video file for an application.

The notification manager enables an application to display notification information in the status bar that may be used to convey a notification message. The notification message may disappear automatically after a short stay without a user interaction. For example, the notification information notifies download completion, a message prompt, and the like. The notification information may alternatively be a notification that appears on a top status bar of the system in a form of a graph or a scroll bar text, for example, a notification of an application running on the background, or may be a notification that appears on the screen in a form of a dialog window. For example, the notification information may alternatively be text information prompted on a status bar, a prompt tone made by the electronic device, vibration, or blinking of an indicator light.

The view system includes visual controls such as a control for displaying a text and a control for displaying a picture. The view system may be configured to build an application. A display interface may include one or more views. For example, a display interface including a Message notification icon may include a view for displaying a text and a view for displaying a picture.

The Android Runtime includes a kernel library and a virtual machine. The Android Runtime is responsible for scheduling and managing the Android system.

The core library includes two parts: one part is a performance function that the Java language needs to invoke, and the other part is a core library of Android.

The application layer and the application framework layer are run on the virtual machine. The virtual machine executes Java files of the application layer and the application framework layer as binary files. The virtual machine is used to execute functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), a 2D graphics engine (for example, SGL), an image extraction module, an image composition module, a predicted frame generation module, and a predicted frame completion module.

The surface manager is configured to manage a display subsystem, and provide fusion of 2D and 3D layers to a plurality of applications.

The media library supports playback and recording in a plurality of common audio and video formats, and also supports static image files and the like. The media library may support a plurality of audio and video encoding formats, such as MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

In embodiments of this application, the predicted frame generation module may be configured to generate a predicted frame of image based on information about two adjacent frames of images. As shown in FIG. 8, the predicted frame generation module may include an MV calculation submodule and an image warping submodule.

The MV calculation submodule may be configured to calculate a MV based on two consecutive frames of images.

The image warping submodule may be configured to perform image warping on an image based on the MV. In embodiments of this application, the image warping submodule may separately perform image warping on a static object and a dynamic object in the image. When performing image warping on the static object, the image warping submodule may subdivide an image Mesh based on depth information of pixel points, and perform image warping in an image Mesh geometry obtained by subdivision. In addition, when performing image warping in the image Mesh geometry obtained by subdivision, the image warping submodule further performs related processing with reference to the depth information of the pixel points, and cover an image Mesh geometry with a high pixel point depth value on an image Mesh geometry with a low pixel point depth value, so that objects in the predicted frame of image can maintain a correct depth relationship.

The predicted frame completion module may be configured to perform completion such as blur completion on a blank area in the predicted frame of image generated by the predicted frame generation module, to obtain a predicted frame of image by image completion.

The image extraction module may be configured to separate image information and UI information from a resource image frame, to obtain an image frame. The image frame is used for intermediate frame prediction.

The image extraction module may also be integrated into the three-dimensional graphics processing library. This is not limited in the embodiments.

The image composition module may be configured to fuse the predicted frame of image obtained by image completion and the UI information, to obtain a to-be-displayed predicted frame.

The kernel layer is a layer between hardware and software. The kernel layer includes at least a display driver, an audio driver, a Wi-Fi driver, and a sensor driver. The hardware includes at least a processor, a display, a Wi-Fi module, a sensor, and the like.

It may be understood that layers and components at the layers in the software structure shown in FIG. 8 do not constitute a specific limitation on the electronic device 100. In other embodiments of this application, the electronic device 100 may include more or fewer layers than shown in the figure, and each layer may include more or fewer components. This is not limited in this application.

It may be understood that to implement the image processing method in embodiments of this application, the electronic device includes corresponding hardware and/or software modules for performing the functions. Algorithm steps in the examples described with reference to the embodiments disclosed in this specification can be implemented by hardware or a combination of hardware and computer software in this application. Whether a function is performed by hardware or hardware driven by computer software depends on particular applications and design constraints of the technical solutions. A person of skill in the art may use different methods to implement the described functions with reference to embodiments for each particular application, but it should not be considered that the implementation goes beyond the scope of this application.

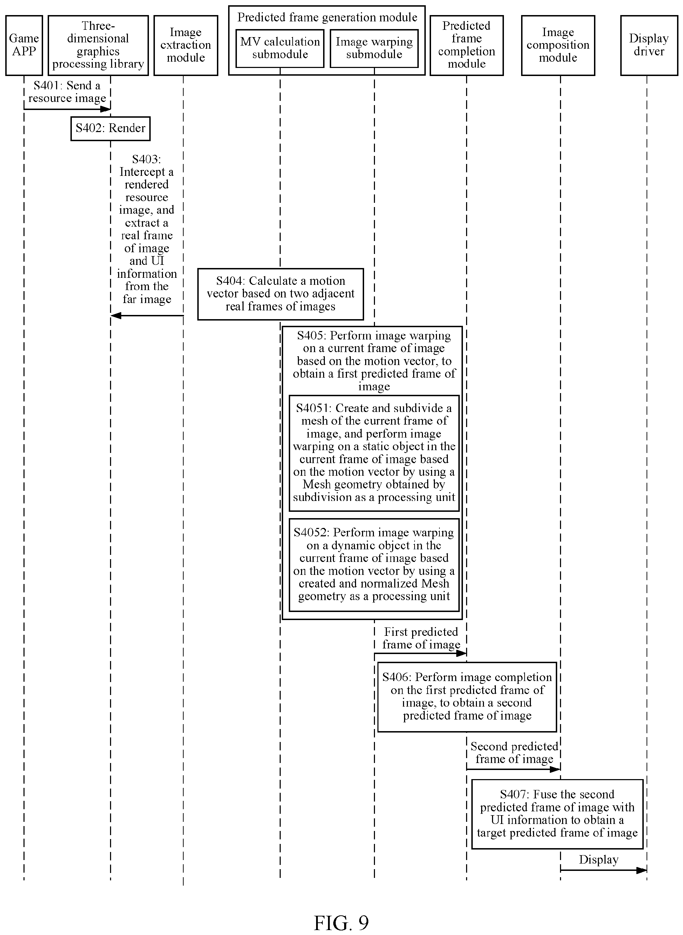

FIG. 9 is a diagram of interaction between modules. As shown in FIG. 9, in a game frame interpolation scenario, an image processing method provided in an embodiment of this application specifically includes the following steps.

S401: A game APP sends a resource image to a three-dimensional graphics processing library.

The resource image is image data of the game APP, and is intended to display an image on an interface of the game APP. The resource image includes image information and UI information.

The UI information is overall design information of human-computer interaction, operation logic, and interface aesthetics of software.

The image information includes but is not limited to a GRB (Green, Red, Blue) value and a depth value of each pixel point.

S402: The three-dimensional graphics processing library renders the resource image of the game APP.

For a process of rendering the resource image by the three-dimensional graphics processing library, refer to the conventional technology. Details are not described herein.

S403: The image extraction module intercepts a rendered resource image, extracts a real frame of image and UI information from the resource image, and correspondingly stores the real frame of image and the UI information.

In most cases, the UI information does not change, and a display position in each frame of picture is fixed, and does not change. For example, on an interface of the game application, the UI information may include a user operation control.

When an electronic device predicts an intermediate frame of image based on adjacent real frames of images, because the interface UI information does not change, the electronic device may first separate the image information and the UI information by using the image extraction module, and performs intermediate frame prediction based on only the image information, to reduce an image data processing amount and improve accuracy of prediction of an intermediate frame of image.

In some special cases, the UI information may change. The electronic device may first separate the image information and the UI information by using the image extraction module, perform intermediate frame prediction based on the image information, and then fuse an intermediate frame of image with UI information of a current real frame of image after obtaining the intermediate frame of image. This is not limited in this embodiment.

The image extraction module identifies a real frame of image (that is, an image in a game scene) and the UI information in the rendered resource image by using a feature, and draws the real frame of image into a private image frame cache.

In addition, the image extraction module also correspondingly stores the matched UI information. For example, the UI information may include but is not limited to content of a UI image and display position information of a UI image.

S404: A MV calculation submodule calculates a motion vector based on two adjacent real frames of images.

The two adjacent real frames of images may be a current real frame of image and a previous real frame of image of the current real frame of image, for example, the real frame of image 103 and the real frame of image 101 shown in FIG. 2.

The MV calculation submodule reads the two adj acent real frames of images in the image frame cache, and calculates the motion vector corresponding to the two real frames of images.

The MV calculation submodule may select, based on an object attribute (such as a static object and a dynamic object) pre-marked in each image region in the real frame of image, a matched calculation manner to calculate a motion vector corresponding to each image region, to obtain a motion vector corresponding to the current frame of image, for example, a motion vector frame 105 shown in FIG. 2.

In an optional implementation, some objects (for example, a person) in the image are pre-marked with a dynamic object (for example, an object in a moving state) attribute, and another unmarked object (for example, a sky or a column) in the image is a static object.

For example, for an image region corresponding to a static object, the MV calculation submodule may calculate a corresponding motion vector by using a reprojection method. For an image region corresponding to a dynamic object, the MV calculation submodule may calculate a corresponding motion vector by using an optical flow method. For steps of the method for calculating the motion vectors by using the reprojection method and the optical flow method, refer to the conventional technology. Details are not described herein.

S405: An image warping submodule performs image warping on the current frame of image based on the motion vector to obtain a first predicted frame of image, and sends the first predicted frame of image to a predicted frame completion module.

After the MV calculation submodule calculates the motion vector corresponding to the current frame of image based on the current frame of image and the previous frame of image of the current frame of image, the image warping submodule performs image warping on the current frame of image based on the motion vector, to obtain the first predicted frame of image.

It should be noted that because objects in a video source move at different speeds, image information overlapping and image information missing may occur in the predicted frame of image calculated by the image warping submodule based on the motion vector. That is, the first predicted frame of image is a predicted frame of image whose image is to be completed, for example, the predicted frame of image 106 shown in FIG. 2.

When performing image warping on the current frame of image based on the motion vector, the image warping submodule first performs, based on the motion vector, image warping on the image region corresponding to the static object in the current frame of image, and then performs, based on the motion vector, image warping on the image region corresponding to the dynamic object in the current frame of image, to obtain the first predicted frame of image.

In an optional implementation, S405 may specifically include the following steps.

S4051: The image warping submodule creates and subdivides a mesh (Mesh) of the current frame of image, and performs image warping on the static object in the current frame of image based on the motion vector by using a Mesh geometry obtained by subdivision as a processing unit.

S4052: The image warping submodule performs image warping on the dynamic object in the current frame of image based on the motion vector by using a created and normalized Mesh geometry as a processing unit.

After creating the Mesh of the current frame of image, the image warping submodule may normalize the Mesh, to facilitate processing in a geometric figure. Therefore, the image warping submodule performs image warping on the dynamic object in the current frame of image based on the motion vector by using the normalized Mesh geometry as a processing unit. For creation and normalization of an image Mesh, refer to the following. Details are not described herein.

An image region with discontinuous depth values is generally in an edge region of a static object in an image. Therefore, when performing, based on the motion vector, image warping on a Mesh geometry corresponding to the static object in the current frame of image, the image warping submodule first subdivides the Mesh geometry based on depth information of pixel points, so that depth values of pixels corresponding to a Mesh geometry obtained by subdivision are continuous. That is, in each Mesh geometry obtained by subdivision, depth values of pixel points are continuous, or a difference between the depth values of the pixel points is small.

When the image warping submodule performs image warping on the mesh obtained by subdivision based on the motion vector, continuous graphic information of the static object can be better retained, to avoid distortion in the edge region of the static object.

It should be noted that, that image warping is performed on the Mesh geometry based on the motion vector means that a position of each vertex of the Mesh geometry is moved based on a motion vector corresponding to each vertex of the Mesh geometry. Whether a refined Mesh geometry is used as a processing unit to move the static object, or an unrefined Mesh geometry is used as a processing unit to move the dynamic object, processing manners are consistent, and a difference lies only in that refinement degrees of the Mesh geometry are different.

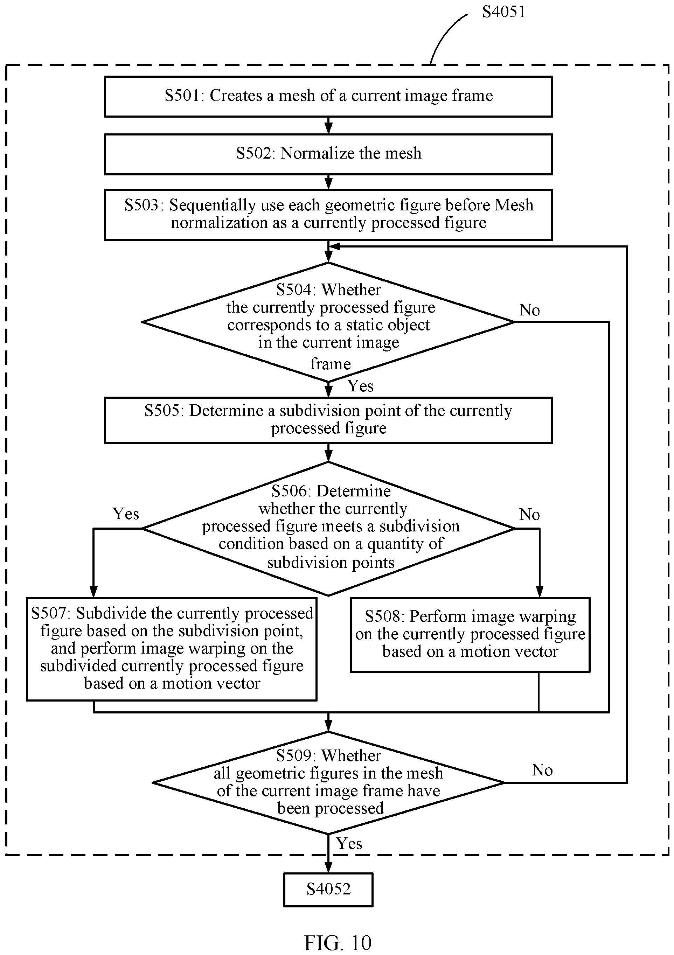

In an optional implementation, S4051 may be concretized as S501 to S509. As shown in FIG. 10, a procedure in which the image warping submodule performs image warping on the static object in the current frame of image specifically includes the following steps.

S501: The image warping submodule creates a mesh of the current image frame.

That the image warping submodule creates the mesh (Mesh) of the current image frame may also be referred to as meshing the current image frame, to segment the current frame of image into geometric figures for easier processing, such as polygons, triangles, or quadrilaterals.

The Mesh of the current image frame created by the image warping submodule is consistent with the current image frame in size, so that each figure filled in the Mesh can cover a pixel region of the current image frame.

For example, in this embodiment of this application, the image warping submodule may create a quadrilateral mesh of the current image frame, that is, mesh the current image frame according to a size of a quadrilateral. The quadrilateral may be a square.

S502: The image warping submodule normalizes the mesh.

If the image warping submodule creates a non-triangular mesh for the current image frame, for example, a quadrilateral mesh, the image warping submodule may normalize the non-triangular mesh, so that each non-triangle in the mesh is divided into a plurality of triangles. This facilitates graphic calculation.

For example, the image warping submodule creates the quadrilateral mesh of the current image frame, and the image warping submodule may divide each quadrilateral in the quadrilateral mesh into two triangles, to normalize the mesh.

Each quadrilateral or triangle in the quadrilateral mesh may be indexed by using a vertex. For example, for ease of calculation and processing, vertexes of each quadrilateral or triangle may be sorted in a clockwise direction, to normalize vertex indexes in the image mesh.

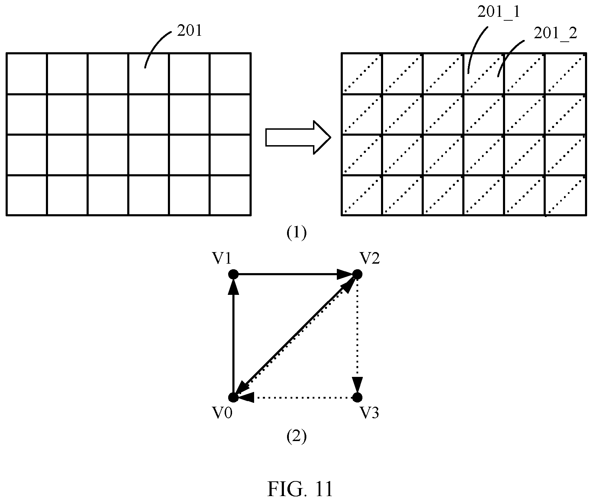

As shown in (1) in FIG. 11, each quadrilateral 201 in the mesh of the current image frame may be divided into a triangle 201_1 and a triangle 201_2. As shown in (2) in FIG. 11, a quadrilateral Square (V0-V1-V2-V3) is used as an example, and the quadrilateral may be divided into a triangle Tringle1 (V0-V1-V2) and a triangle Tringle2 (V2-V3-V0). In the triangle Tringle1, V0 is a start vertex, and V2 is an end vertex. In the triangle Tringle2, V2 is a start vertex, and V0 is an end vertex.

It should be noted that in a process of normalizing the quadrilateral Square (V0-V1-V2-V3), the start vertex V0 of the first triangle (that is, Tringle1 (V0-V1-V2)) is the start vertex V0 of the quadrilateral Square (V0-V1-V2-V3), and a start side V0-V1 of the first triangle is a start side V0-V1 of the quadrilateral. In addition, the end vertex V2 of the first triangle is the start vertex V2 of the second triangle (that is, Tringle2 (V2-V3-V0)), and the end vertex V0 of the second triangle is the start vertex V0 of the first triangle.

S503: The image warping submodule sequentially uses each geometric figure before Mesh normalization as a currently processed figure (or referred to as a currently processed Mesh geometric figure).

The image warping submodule determines, by using each geometric figure created before normalization as a processing unit, whether mesh subdivision needs to be performed, and how to perform mesh subdivision and image warping. In other words, the image warping submodule sequentially determines whether mesh subdivision needs to be performed on each quadrilateral before normalization, and how to perform mesh subdivision and image warping. In the mesh division example shown in (1) in FIG. 11, the image warping submodule sequentially determines whether mesh subdivision needs to be performed on each quadrilateral and how to perform mesh subdivision and image warping.

It should be noted that the image warping submodule may also determine, in parallel, whether mesh subdivision needs to be performed on each geometric figure before normalization, and how to perform mesh subdivision and image warping. For each geometric figure, for a determining and processing procedure of the image warping submodule, refer to S504 to S508.

S504: The image warping submodule determines whether the currently processed figure corresponds to the static object in the current image frame, and if the currently processed figure corresponds to the static object, performs S505, or if the currently processed figure does correspond to the static object, performs S509.

In the Mesh of the current image frame, mesh subdivision needs to be performed on only a geometric figure corresponding to a static object in this embodiment, so that depth values of pixel points in each geometric figure corresponding to the static object are continuous. Therefore, the image warping submodule needs to determine whether the currently processed figure corresponds to the static object.

The image warping submodule may determine, based on image pre-marking information, whether the currently processed figure corresponds to the static object, and if the currently processed figure does not correspond to the static object, continue to determine a next geometric figure in the Mesh in sequence until all geometric figures in the Mesh of the current image frame are processed. If the currently processed figure corresponds to the static object, the image warping submodule continues to determine whether the currently processed figure meets a mesh segmentation condition.

S505: The image warping submodule determines a subdivision point of the currently processed figure.

When determining whether the currently processed figure meets the mesh segmentation condition, the image warping submodule determines whether a subdivision point corresponding to the currently processed figure exists, and may further determine, based on a quantity of subdivision points, whether the currently processed figure meets the mesh segmentation condition.

The subdivision point is a pixel point for mesh subdivision on a geometric figure in the Mesh, and the pixel point is located on a side of the geometric figure. A quadrilateral in a quadrilateral Mesh is used as an example, a subdivision point needs to be located on any side of the quadrilateral.

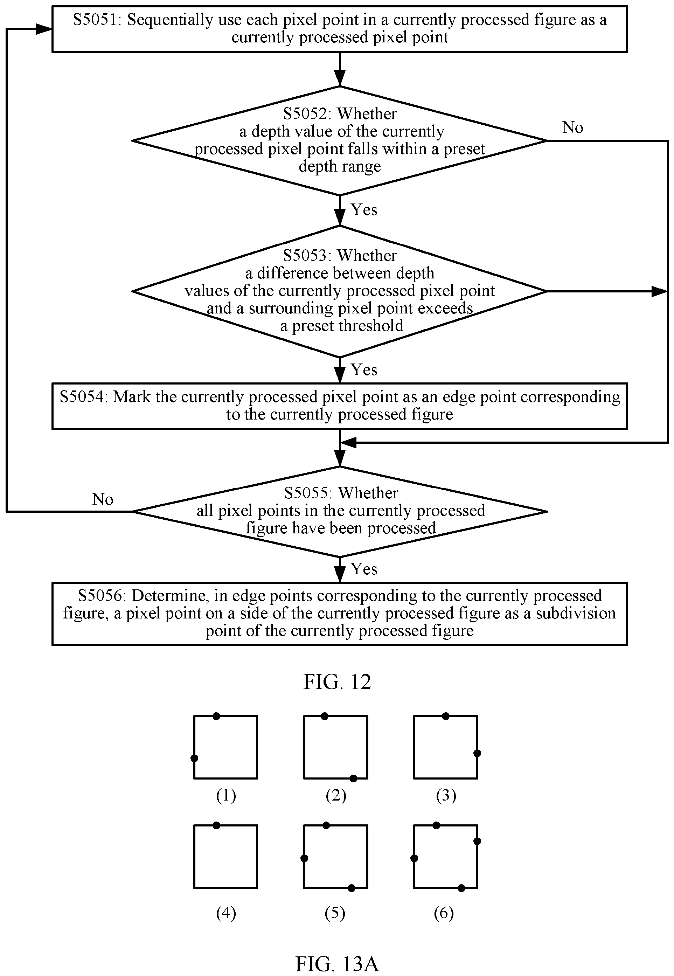

FIG. 12 shows an example procedure for determining a subdivision point. As shown in FIG. 12, a specific procedure in which the image warping submodule determines the subdivision point of the currently processed figure includes the following steps.

S5051: The image warping submodule sequentially uses each pixel point in the currently processed figure as a currently processed pixel point.

The image warping submodule determines whether each pixel point in the currently processed figure is a subdivision point of the currently processed figure.

It should be noted that the image warping submodule may also determine in parallel whether each pixel point in the currently processed figure is a subdivision point of the currently processed figure. For a determining procedure of the image warping submodule for each pixel point in each currently processed figure, refer to S5052 to S5056.

S5052: The image warping submodule determines whether a depth value of the currently processed pixel point falls within a preset depth range, and if the depth value of the currently processed pixel point falls within the preset depth range, performs S5053, or if the depth value of the currently processed pixel point falls beyond the preset depth range, performs S5055.

The preset depth range may be understood as a depth range of interest, and an edge of a static object in the depth range is easily distorted during image warping.

S5053: The image warping submodule determines whether a difference between the depth value of the currently processed pixel point and a depth value of a surrounding pixel point exceeds a preset threshold, and if the difference exceeds the preset threshold, performs S5054, or if the difference does not exceed the preset threshold, performs S5055.

If the difference between the depth value of the currently processed pixel point and the depth value of the surrounding pixel point exceeds the preset threshold, it indicates that the depth value of the currently processed pixel point greatly differs from the depth value of the surrounding pixel point, and the currently processed pixel point may be located on an edge of the static object.

S5054: The image warping submodule marks the currently processed pixel point as an edge point corresponding to the currently processed figure.

The edge point is also referred to as an edge point of a static object, that is, a pixel point on an edge of the static object.

S5055: The image warping submodule determines whether all pixel points in the currently processed figure have been processed.

The image warping submodule first identifies edge points in all the pixel points in the currently processed figure, and then determines whether a subdivision point of the currently processed figure exists in the edge points.

For any pixel point in the currently processed figure, if a depth value of the pixel point falls within the preset depth range, and a difference between the depth value of the pixel point and a depth value of any surrounding pixel point exceeds the preset threshold, the image warping submodule determines that the pixel point is an edge point of a static object.

S5056: The image warping submodule determines, in edge points of the static object corresponding to the currently processed figure, a pixel point on a side of the currently processed figure as the subdivision point of the currently processed figure.

In the currently processed figure, after identifying the edge points of the static object, the image warping submodule determines whether each edge point of the static object is on a side of the currently processed figure, and if an edge point of the static object is on a side of the currently processed figure, uses the edge point of the static object as the subdivision point of the currently processed figure.

For example, the image warping submodule may determine, based on a compute shader (Compute Shader), whether each edge point of the static object is located on a side of the currently processed figure. For detailed descriptions of the compute shader, refer to the conventional technology. Details are not described herein.

In a possible implementation, after determining the edge points of each static object corresponding to each geometric figure, the image warping submodule may also determine a subdivision point corresponding to each geometric figure.

For example, after determining the edge points of the static object corresponding to each geometric figure, the image warping submodule may generate a mask image of the edge points of the static object. In the mask image of the edge points of the static object, a grayscale value of an edge point of the static object is 1, and a grayscale value of another pixel point is 0. In addition, based on the created Mesh of the current image frame, the image warping submodule may also determine a mask image of geometric figure sides in the Mesh. In the mask image of the geometric figure sides, a grayscale value of a pixel point on a geometric figure side is 1, and a grayscale value of another pixel point is 0.

The image warping submodule may calculate, based on the mask image of the geometric figure and the calculated mask image of the edge points of the static object, an edge point of the static object on a geometric figure side, that is, a subdivision point. The image warping submodule performs an "AND" operation on the mask image of the edge points of the static object and the mask image of the geometric figure sides, to obtain a mask image of subdivision points. In the mask image of subdivision points, a grayscale value of a subdivision point is 1, and a gray value of another pixel point is 0. In this way, the image warping submodule can record coordinates of a subdivision point corresponding to each geometric figure in the Mesh.

It should be noted that a quantity of subdivision points of different geometric figures in the Mesh is not necessarily the same in different image scenes. A quadrilateral in a quadrilateral Mesh is used as an example, and a quantity of subdivision points of the quadrilateral may be any value in 1, 2, 3, and 4. As shown in FIG. 13A, (1), (2), and (3) in FIG. 13A each show an example case in which the quantity of subdivision points of the quadrilateral in the Mesh is 2. (4) in FIG. 13A shows an example case in which the quantity of subdivision points of the quadrilateral in the Mesh is 1. (5) in FIG. 13A shows an example case in which the quantity of subdivision points of the quadrilateral in the Mesh is 4. (6) in FIG. 13A shows an example case in which the quantity of subdivision points of the quadrilateral in the Mesh is 4. For some special scenarios, the quantity of subdivision points of the geometric figure in the Mesh may be another number, and each side does not necessarily have only one subdivision point.

S506: The image warping submodule determines, based on the quantity of subdivision points, whether the currently processed figure meets the mesh subdivision condition, and if the currently processed figure meets the mesh subdivision condition, performs S507, or if the currently processed figure does not meet the mesh subdivision condition, performs S508.

In this embodiment of this application, the mesh subdivision condition may be that a quantity of subdivision points of a geometric figure in the Mesh is 2, and the two subdivision points are located on different sides of the geometric figure. That is, the mesh subdivision condition may be that the geometric figure has exactly two subdivision points, and at most one subdivision point exists on each side of the geometric figure.

S507: The image warping submodule subdivides the currently processed figure based on the subdivision points, and performs image warping on the subdivided currently processed figure based on the motion vector.

If the quantity of subdivision points of the currently processed figure is 2, and the two subdivision points are located on different sides of the currently processed figure, the currently processed figure meets the mesh subdivision condition. The image warping submodule subdivides the currently processed figure based on the two subdivision points, and performs image warping on the normalized and subdivided currently processed figure.

When subdividing the currently processed figure based on the two subdivision points, the image warping submodule may select, based on a coordinate relationship between the two subdivision points and vertexes of each triangle obtained by normalization on the currently processed figure, a matched subdivision policy to subdivide a corresponding triangle.

The following separately explains various mesh subdivision cases with reference to the normalized Mesh shown in (2) in FIG. 11. In the normalized Mesh shown in (2) in FIG. 11, a quadrilateral Square (V0-V1-V2-V3) is divided into a first triangle (that is, a triangle Tringle1 (V0-V1-V2)) and a second triangle (that is, a triangle Tringle2 (V2-V3-V0)).

### Case 1

In this case, mesh subdivision needs to be performed on only the first triangle, and does not need to be performed on the second triangle.

In the two subdivision points, a horizontal coordinate of a first subdivision point is equal to horizontal coordinates of a first vertex (or referred to as a start vertex) and a second vertex (or referred to as a middle vertex) of the first triangle, and a vertical coordinate of a second subdivision point is equal to vertical coordinates of the second vertex and a third vertex (or referred to as an end vertex) of the first triangle. In this case, the image warping submodule needs to perform mesh subdivision on only the first triangle based on the two subdivision points, and does not need to perform mesh subdivision on the second triangle.

In an implementation, the image warping submodule may connect the first subdivision point and the second subdivision point, and connect the first subdivision point and the third vertex of the first triangle, to perform mesh subdivision on the first triangle to obtain a plurality of subdivided triangles.

As shown in (1) in FIG. 13B, the horizontal coordinate of the first subdivision point Point 2 is equal to the horizontal coordinates of the first vertex V0 and the second vertex V1 of the first triangle, and the vertical coordinate of the second subdivision point Point 1 is equal to the vertical coordinates of the second vertex V1 and the third vertex V2 of the first triangle. In this case, the image warping submodule needs to perform mesh subdivision on only the first triangle based on the subdivision points Point 2 and Point 1, and does not need to perform mesh subdivision on the second triangle.

Still refer to (1) in FIG. 13B. The image warping submodule connects the first subdivision point Point 2 and the second subdivision point Point 1, and connects the first subdivision point Point 2 and the third vertex V2 of the first triangle, to subdivide the first triangle Tringle1 (V0-V1-V2) into: a first subdivided triangle S-Tringle1 (VO-Point 2-V2), a second subdivided triangle S-Tringle2 (Point 2-Point 1-V2), and a third subdivided triangle S-Tringle3 (Point 2-V1-Point 1).

In another implementation, the image warping submodule may alternatively connect the first subdivision point and the second subdivision point, and connect the second subdivision point and the first vertex of the first triangle, to perform mesh subdivision on the first triangle to obtain a plurality of subdivided triangles.

As shown in (2) FIG. 13B. The image warping submodule connects the first subdivision point Point 2 and the second subdivision point Point 1, and connects the second subdivision point Point 1 and the first vertex V0 of the first triangle, to subdivide the first triangle Tringle1 (V0-V1-V2) into: a first subdivided triangle S-Tringle1 (V0-Point 2-Point 1), a second subdivided triangle S-Tringle2 (Point 2-V1-Point 1), and a third subdivided triangle S-Tringle3 (Point 1-V2-V0).

Vertex indexes of each subdivided triangle are also sorted in a clockwise order. The following cases are also the same. Details are not described in the following.

In the subdivision modes shown in (1) and (2) in FIG. 13B, a start side (V0-Point 2) of the first subdivided triangle S-Tringle1 is located on a start side (V0-V1) of the first triangle, that is, is located on a start side (V0-V1) of the quadrilateral, and a geometric processing sequence of the first triangle is not affected, to facilitate the developer to perform subdivision programming.

### Case 2

In this case, mesh subdivision needs to be performed on the first triangle and the second triangle together.
(1) In the two subdivision points, a vertical coordinate of a first subdivision point is equal to vertical coordinates of a second vertex and a third vertex of the first triangle, and a vertical coordinate of a second subdivision point is equal to vertical coordinates of a second vertex and a third vertex of the second triangle. In this case, the image warping submodule needs to perform mesh subdivision on the first triangle and the second triangle together based on the two subdivision points.

The image warping submodule may connect the first subdivision point and the second subdivision point, connect the first subdivision point and a first vertex of the first triangle, and connect the second subdivision point and a first vertex of the second triangle, to perform mesh subdivision on the first triangle and the second triangle to obtain a plurality of subdivided triangles.

It should be noted that, when the image warping submodule may connect the first subdivision point and the second subdivision point, a line connecting the first subdivision point and the second subdivision point intersects with the end side (that is, the end side of the second triangle) of the first triangle, and mesh subdivision can be performed on the first triangle and the second triangle together.

As shown in (3) in FIG. 13B, the vertical coordinate of the first subdivision point Point 1 is equal to the vertical coordinates of the second vertex V1 and the third vertex V2 of the first triangle, and the vertical coordinate of the second subdivision point Point 2 is equal to the vertical coordinates of the second vertex V3 and the third vertex V0 of the second triangle. In this case, the image warping submodule needs to perform mesh segmentation on the first triangle and the second triangle together based on the subdivision points Point 1 and Point 2.

Still refer to (3) in FIG. 13B. The image warping submodule connects the first subdivision point Point 1 and the second subdivision point Point 2, connects the first subdivision point Point 1 and the first vertex V0 of the first triangle, and connects the second subdivision point Point 2 and the first vertex V2 of the second triangle. The line connecting the first subdivision point Point 1 and the second subdivision point Point 2 intersects with the end side (V2-V0) of the first triangle (that is, the end side (V0-V2) of the second triangle) at a point PointInter. In this way, the first triangle Tringle1 (V0-V1-V2) is subdivided into: a first subdivided triangle S-Tringle1 (V0-V1-Point 1), a second subdivided triangle S-Tringle2 (VO-Point 1-PointInter), and a third subdivided triangle S-Tringle3 (PointInter-Point 1-V2). The second triangle Tringle2 (V2-V3-V0) is subdivided into: a first subdivided triangle S-Tringle1 (V2-V3-Point 2), a second subdivided triangle S-Tringle2 (V2-Point 2-PointInter), and a third subdivided triangle S-Tringle3 (PointInter-Point 2-V0).

(2) In the two subdivision points, a vertical coordinate of a first subdivision point is equal to vertical coordinates of a second vertex and a third vertex of the first triangle, and a horizontal coordinate of a second subdivision point is equal to horizontal coordinates of a first vertex and a second vertex of the second triangle. In this case, the image warping submodule needs to perform mesh subdivision on the first triangle and the second triangle together based on the two subdivision points.

The image warping submodule may connect the first subdivision point and the second subdivision point, connect the first subdivision point and a first vertex of the first triangle, and connect the second subdivision point and a third vertex of the second triangle, to perform mesh subdivision on the first triangle and the second triangle to obtain a plurality of subdivided triangles.

It should be noted that, when the image warping submodule may connect the first subdivision point and the second subdivision point, a line connecting the first subdivision point and the second subdivision point intersects with the end side (that is, the end side of the second triangle) of the first triangle, and mesh subdivision can be performed on the first triangle and the second triangle together.

As shown in (4) in FIG. 13B, the vertical coordinate of the first subdivision point Point 1 is equal to the vertical coordinates of the second vertex V1 and the third vertex V2 of the first triangle, and the horizontal coordinate of the second subdivision point Point 2 is equal to the horizontal coordinates of the first vertex V2 and the second vertex V3 of the second triangle. In this case, the image warping submodule needs to perform mesh segmentation on the first triangle and the second triangle together based on the subdivision points Point 1 and Point 2.

Still refer to (4) in FIG. 13B. The image warping submodule connects the first subdivision point Point 1 and the second subdivision point Point 2, connects the first subdivision point Point 1 and the first vertex V0 of the first triangle, and connects the second subdivision point Point 2 and the third vertex V0 of the second triangle. The line connecting the first subdivision point Point 1 and the second subdivision point Point 2 intersects with the end side (V2-V0) of the first triangle (that is, the end side (V0-V2) of the second triangle) at a point PointInter. In this way, the first triangle Tringle1 (V0-V1-V2) is subdivided into: a first subdivided triangle S-Tringle1 (V0-V1-Point 1), a second subdivided triangle S-Tringle2 (VO-Point 1-PointInter), and a third subdivided triangle S-Tringle3 (PointInter-Point 1-V2). The second triangle Tringle2 (V2-V3-V0) is subdivided into: a first subdivided triangle S-Tringle1 (V2-Point 2-PointInter), a second subdivided triangle S-Tringle2 (Point 2-V0-PointInter), and a third subdivided triangle S-Tringle3 (Point 2-V3-V0).

(3) In the two subdivision points, a horizontal coordinate of a first subdivision point is equal to horizontal coordinates of a first vertex and a second vertex of the first triangle, and a horizontal coordinate of a second subdivision point is equal to horizontal coordinates of a first vertex and a second vertex of the second triangle. In this case, the image warping submodule needs to perform mesh subdivision on the first triangle and the second triangle together based on the two subdivision points.

The image warping submodule may connect the first subdivision point and the second subdivision point, connect the first subdivision point and a third vertex of the first triangle, and connect the second subdivision point and a third vertex of the second triangle, to perform mesh subdivision on the first triangle and the second triangle to obtain a plurality of subdivided triangles.

It should be noted that, when the image warping submodule may connect the first subdivision point and the second subdivision point, a line connecting the first subdivision point and the second subdivision point intersects with the end side (that is, the end side of the second triangle) of the first triangle, and mesh subdivision can be performed on the first triangle and the second triangle together.

As shown in (5) in FIG. 13B, the horizontal coordinate of the first subdivision point Point 1 is equal to the horizontal coordinates of the first vertex V0 and the second vertex V1 of the first triangle, and the horizontal coordinate of the second subdivision point Point 2 is equal to the horizontal coordinates of the first vertex V2 and the second vertex V3 of the second triangle. In this case, the image warping submodule needs to perform mesh segmentation on the first triangle and the second triangle together based on the subdivision points Point 1 and Point 2.

Still refer to (5) in FIG. 13B. The image warping submodule connects the first subdivision point Point 1 and the second subdivision point Point 2, connects the first subdivision point Point 1 and the third vertex V2 of the first triangle, and connects the second subdivision point Point 2 and the third vertex V0 of the second triangle. The line connecting the first subdivision point Point 1 and the second subdivision point Point 2 intersects with the end side (V2-V0) of the first triangle (that is, the end side (V0-V2) of the second triangle) at a point PointInter. In this way, the first triangle Tringle1 (V0-V1-V2) is subdivided into: a first subdivided triangle S-Tringle1 (V0-Point 1-PointInter), a second subdivided triangle S-Tringle2 (Point 1-V2-PointInter), and a third subdivided triangle S-Tringle3 (Point 1-V1-V2). The second triangle Tringle2 (V2-V3-V0) is subdivided into: a first subdivided triangle S-Tringle1 (V2-Point 2-PointInter), a second subdivided triangle S-Tringle2 (Point 2-V0-PointInter), and a third subdivided triangle S-Tringle3 (Point 2-V3-V0).

(4) In the two subdivision points, a horizontal coordinate of a first subdivision point is equal to horizontal coordinates of a first vertex and a second vertex of the first triangle, and a vertical coordinate of a second subdivision point is equal to vertical coordinates of a second vertex and a third vertex of the second triangle. In this case, the image warping submodule needs to perform mesh subdivision on the first triangle and the second triangle together based on the two subdivision points.

The image warping submodule may connect the first subdivision point and the second subdivision point, connect the first subdivision point and a third vertex of the first triangle, and connect the second subdivision point and a first vertex of the second triangle, to perform mesh subdivision on the first triangle and the second triangle to obtain a plurality of subdivided triangles.

It should be noted that, when the image warping submodule may connect the first subdivision point and the second subdivision point, a line connecting the first subdivision point and the second subdivision point intersects with the end side (that is, the end side of the second triangle) of the first triangle, and mesh subdivision can be performed on the first triangle and the second triangle together.

As shown in (6) in FIG. 13B, the horizontal coordinate of the first subdivision point Point 1 is equal to the horizontal coordinates of the first vertex V0 and the second vertex V1 of the first triangle, and the vertical coordinate of the second subdivision point Point 2 is equal to the vertical coordinates of the second vertex V3 and the third vertex V0 of the second triangle. In this case, the image warping submodule needs to perform mesh segmentation on the first triangle and the second triangle together based on the subdivision points Point 1 and Point 2.

Still refer to (6) in FIG. 13B. The image warping submodule connects the first subdivision point Point 1 and the second subdivision point Point 2, connects the first subdivision point Point 1 and the third vertex V2 of the first triangle, and connects the second subdivision point Point 2 and the first vertex V2 of the second triangle. The line connecting the first subdivision point Point 1 and the second subdivision point Point 2 intersects with the end side (V2-V0) of the first triangle (that is, the end side (V0-V2) of the second triangle) at a point PointInter. In this way, the first triangle Tringle1 (V0-V1-V2) is subdivided into: a first subdivided triangle S-Tringle1 (V0-Point 1-PointInter), a second subdivided triangle S-Tringle2 (Point 1-V2-PointInter), and a third subdivided triangle S-Tringle3 (Point 1-V1-V2). The second triangle Tringle2 (V2-V3-V0) is subdivided into: a first subdivided triangle S-Tringle1 (V2-V3-Point 2), a second subdivided triangle S-Tringle2 (Point 2-PointInter-V2), and a third subdivided triangle S-Tringle3 (Point 2-V0-PointInter).

In the subdivision modes shown in (3) to (6) in FIG. 13B, the two subdivision points divide the two triangles together. A start side of the first subdivided triangle obtained by dividing the first triangle is located on the start side (V0-V1) of the first triangle, that is, is located on the start side (V0-V1) of the quadrilateral. A start side of the first subdivided triangle obtained by dividing the second triangle is also located on the start side (V0-V1) of the second triangle. Such mesh subdivision does not affect a geometric processing sequence of a triangle before subdivision, to facilitate a developer to perform subdivision programming.

### Case 3

In this case, mesh subdivision does not need to be performed on the first triangle, and needs to be performed on only the second triangle.

In the two subdivision points, a horizontal coordinate of a first subdivision point is equal to horizontal coordinates of a first vertex and a second vertex of the second triangle, and a vertical coordinate of a second subdivision point is equal to vertical coordinates of a second vertex and a third vertex of the first triangle. In this case, the image warping submodule needs to perform mesh subdivision on only the second triangle based on the two subdivision points, and does not need to perform mesh subdivision on the first triangle.

In an implementation, the image warping submodule may connect the first subdivision point and the second subdivision point, and connect the first subdivision point and the third vertex of the second triangle, to perform mesh subdivision on the second triangle to obtain a plurality of subdivided triangles.

As shown in (7) in FIG. 13B, the horizontal coordinate of the first subdivision point Point 1 is equal to the horizontal coordinates of the first vertex V2 and the second vertex V3 of the second triangle, and the vertical coordinate of the second subdivision point Point 2 is equal to the vertical coordinates of the second vertex V3 and the third vertex V0 of the second triangle. In this case, the image warping submodule needs to perform mesh subdivision on only the second triangle based on the subdivision points Point 2 and Point 1, and does not need to perform mesh subdivision on the first triangle.

Still refer to (7) in FIG. 13B. The image warping submodule connects the first subdivision point Point 1 and the second subdivision point Point 2, and connects the first subdivision point Point 1 and the third vertex point V0 of the second triangle, to subdivide the second triangle Tringle1 (V2-V3-V0) into: a first subdivided triangle S-Tringle1 (V2-Point 1-V0), a second subdivided triangle S-Tringle2 (Point 1-Point 2-V0), and a third subdivided triangle S-Tringle3 (Point 1-V3-Point 2).

In another implementation, the image warping submodule may alternatively connect the first subdivision point and the second subdivision point, and connect the second subdivision point and the first vertex of the second triangle, to perform mesh subdivision on the second triangle to obtain a plurality of subdivided triangles.

As shown in (8) in FIG. 13B. The image warping submodule connects the first subdivision point Point 1 and the second subdivision point Point 2, and connects the second subdivision point Point 2 and the first vertex V2 of the second triangle, to subdivide the second triangle Tringle1 (V2-V3-V0) into: a first subdivided triangle S-Tringle1 (V2-Point 1-Point 2), a second subdivided triangle S-Tringle2 (Point 1-V3-Point 2), and a third subdivided triangle S-Tringle3 (Point 2-V0-V2).

In the subdivision modes shown in (7) and (8) in FIG. 13B, a start side (V2-Point 1) of the first subdivided triangle S-Tringle1 is located on the start side (V2-V3) of the second triangle, and a geometric processing sequence of the second triangle is not affected. This facilitates the developer to perform subdivision programming.

In this way, the triangle is subdivided according to the subdivision policy described above, and a smaller control unit can be obtained, so that an image warping operation is more refined. In addition, because the image warping submodule performs mesh subdivision on the triangle based on the subdivision points, a geometric figure with discontinuous depth information in the Mesh is subdivided, and depth information in a geometric figure obtained by subdivision does not vary greatly. Further, when the image warping submodule moves the geometric figures obtained by subdivision, a problem that the geometric figures are severely deformed due to a large difference in depth information of the mesh can be avoided, to ensure correctness of image content, and improve a picture instruction, so that a predicted frame of image is closer to a real frame of image.

After performing mesh subdivision on the currently processed figure based on the subdivision points, the image warping submodule may perform image warping on the normalized and subdivided currently processed figure based on the motion vector. For each triangle obtained by subdivision, when performing image warping, the image warping submodule moves each vertex of the triangle to a corresponding position based on a motion vector corresponding to the vertex, to obtain a triangle by image warping.

At the same time, for each triangle (whether obtained by subdivision or not), the image warping submodule may further set depth information of the triangle based on depth values of vertexes of the triangle. For example, the image warping submodule performs interpolation based on a depth value of each vertex of the triangle to obtain a depth value of each pixel point in the triangle as the depth information of the triangle.

In this way, when moving the triangle based on the motion vector, the image warping submodule may determine a coverage relationship between the triangle and another triangle based on depth information of the triangle. For example, when depth information of a triangle 1 is greater than depth information of a triangle 2, the triangle 1 covers the triangle 2. The triangle 2 is a triangle at a target position when the triangle 1 moves based on a corresponding motion vector.

Therefore, when moving the geometric figure in the Mesh, the image warping submodule refers to pixel depth information. This can ensure a correct depth order between different objects.

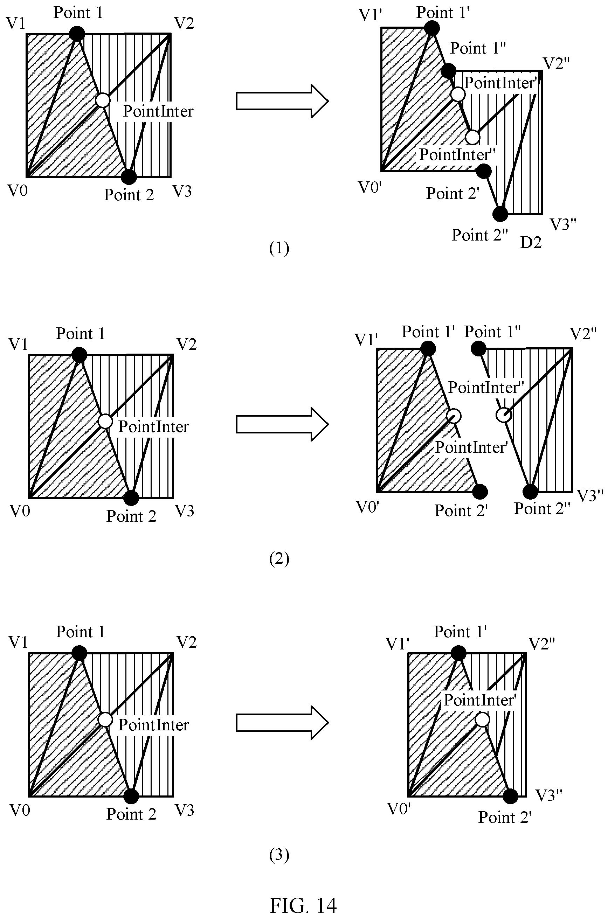

FIG. 14 shows an example diagram of a scenario of performing image warping based on a divided geometric figure. As shown in FIG. 14, in a quadrilateral Square (VO-V1-V2-V3), a first triangle Tringle1 (VO-V1-V2) is subdivided into: a subdivided triangle S-Tringle1 (VO-V1-Point 1), a subdivided triangle S-Tringle2 (V0-Point 1-PointInter), and a subdivided triangle S-Tringle3 (PointInter-Point 1-V2). A second triangle Tringle2 (V2-V3-V0) is subdivided into: a subdivided triangle S-Tringle1' (V2-V3-Point 2), a subdivided triangle S-Tringle2' (V2-Point 2-PointInter), and a subdivided triangle S-Tringle3' (PointInter-Point 2-V0).

Depth information of S-Tringle1 (VO-V1-Point 1), S-Tringle2 (V0-Point 1-PointInter), and S-Tringle3' (PointInter-Point 2-V0) is consistent, and depth information of S-Tringle3 (PointInter-Point 1-V2), S-Tringle1' (V2-V3-Point 2), and S-Tringle2' (V2-Point 2-PointInter) is consistent.

When image warping is performed, the subdivided triangles S-Tringle1, S-Tringle2, S-Tringle3, S-Tringle1', S-Tringle2', and S-Tringle3' are moved based on motion vectors corresponding to respective vertices. For example, S-Tringle1 (VO-V1-Point 1) is moved to S-Tringle1 (VO'-V1'-Point 1'), S-Tringle2 (V0-Point 1-PointInter) is moved to S-Tringle2 (V0'-Point 1'-PointInter'), and S-Tringle3 (PointInter-Point 1-V2) is moved to S-Tringle3 (PointInter"-Point 1"-V2"). Similarly, S-Tringle1' (V2-V3-Point 2) is moved to S-Tringle1' (V2"-V3"-Point 2"), S-Tringle2' (V2-Point 2-PointInter) is moved to S-Tringle2' (V2"-Point 2"-PointInter"), and S-Tringle3' (PointInter-Point 2-V0) is moved to S-Tringle3' (PointInter'-Point 2'-V0').

(1) to (3) in FIG. 14 show examples of different image warping scenarios. In the scenarios shown in (1) to (3) in FIG. 14, moving directions of triangles with consistent depth information are also consistent. This can avoid a problem that a triangle is severely deformed due to a large difference in depth information in the triangle.

When a triangle is moved in the Mesh, a coverage relationship between the triangle and another triangle needs to be determined based on depth information of the triangle. In (3) in FIG. 14, depth values of S-Tringle1 (VO-V1-Point 1), S-Tringle2 (V0-Point 1-PointInter), and S-Tringle3' (PointInter-Point 2-V0) are greater than depth values of S-Tringle3 (PointInter-Point 1-V2), S-Tringle1' (V2-V3-Point 2), and S-Tringle2' (V2-Point 2-PointInter). Therefore, during movement of S-Tringle1 (VO-V1-Point 1), S-Tringle2 (V0-Point 1-PointInter), and S-Tringle3' (PointInter-Point 2-V0), and during movement of S-Tringle3 (PointInter-Point 1-V2), S-Tringle1' (V2-V3-Point 2), and S-Tringle2' (V2-Point 2-PointInter), if there is an overlapping region in a moving target position, S-Tringle1 (VO'-V1'-Point 1'), S-Tringle2 (V0'-Point 1'-PointInter'), and S-Tringle3' (PointInter'-Point 2'-V0') cover S-Tringle3 (PointInter"-Point 1"-V2"), S-Tringle1' (V2"-V3"-Point 2"), and S-Tringle2' (V2"-Point 2"-PointInter"), to ensure a correct depth order between objects in the image region.

S508: The image warping submodule performs image warping on the currently processed figure based on the motion vector.

If the quantity of subdivision points of the currently processed figure is not 2, or the quantity of subdivision points of the currently processed figure is 2, but the two subdivision points are located on a same side of the currently processed figure, the currently processed figure does not meet the mesh subdivision condition. The image warping submodule directly performs image warping on the currently processed figure that is normalized. For the currently processed figure, the image warping submodule performs image warping on each triangle obtained by normalization. When performing image warping on a triangle, the image warping submodule moves each vertex of the triangle to a corresponding position based on a motion vector corresponding to the vertex, to obtain a triangle by image warping.

Similarly, for each unsubdivided triangle, the image warping submodule may further set depth information of the triangle based on depth values of vertexes. For example, the image warping submodule performs interpolation based on a depth value of each vertex of the triangle to obtain a depth value of each pixel point in the triangle as the depth information of the triangle.

In this way, when moving a triangle based on a motion vector, the image warping submodule may determine a coverage relationship between the triangle and another triangle based on depth information of the triangle, to ensure a correct depth order between different objects.

S509: The image warping submodule processes all geometric figures in the Mesh of the current image frame or not, and if the image warping submodule processes all geometric figures, performs S4052, or if the image warping submodule does not process all geometric figures, performs S504.

In this case, the image warping submodule completes an image warping operation for the geometric figure corresponding to the static object in the Mesh of the current image frame.

The image warping submodule continues to complete an image warping operation for a triangle corresponding to the dynamic object in the Mesh of the current image frame. In this case, in the created and normalized Mesh of the current image frame, the image warping submodule searches for each triangle corresponding to the dynamic object, and performs image warping on each triangle corresponding to the dynamic object.

Similarly, for each triangle corresponding to the dynamic object, each vertex of the triangle is moved to a corresponding position based on a motion vector corresponding to the vertex, to obtain a triangle by image warping.

In addition, for each triangle corresponding to the dynamic object, the image warping submodule may further set depth information of the triangle based on depth values of the vertexes. For example, the image warping submodule performs interpolation based on a depth value of each vertex of the triangle to obtain a depth value of each pixel point in the triangle as the depth information of the triangle.

In this way, when moving a triangle based on a motion vector, the image warping submodule may determine a coverage relationship between the triangle and another triangle based on depth information of the triangle, to ensure a correct depth order between different objects.

In this case, the image warping submodule completes an image warping operation for the Mesh geometry corresponding to the dynamic object in the current image frame. That is, the image warping submodule completes an image warping operation for the current frame of image. After operations in an image warping phase are completed, a predicted frame generation image module continues to complete a related operation in a rasterization phase and a pixel processing phase, to generate the first predicted frame of image. For a part of a predicted frame of image generation procedure that is not explained in detail in this embodiment, refer to the conventional technology. Details are not described herein.

In another optional implementation, the image warping submodule may alternatively create a triangle Mesh for the current frame of image. In this case, the image warping submodule may determine whether mesh subdivision needs to be performed on each triangle in the triangle Mesh, and how to perform mesh subdivision and image warping. For a determining and processing procedure for each triangle, refer to the foregoing descriptions. Details are not described herein again. It should be noted that if a quantity of subdivision points of a triangle is 2, the triangle meets the mesh subdivision condition, and mesh subdivision may be performed on the triangle by referring to a subdivision mode in Case 1 or Case 3.

In still another optional implementation, the image warping submodule may alternatively create a polygon Mesh and normalize the current frame of image. In this case, the image warping submodule may determine whether mesh subdivision needs to be performed on each triangle in the polygon Mesh, and how to perform mesh subdivision and image warping. For a determining and processing procedure for each triangle, refer to the foregoing descriptions. Details are not described herein again. It should be noted that if a quantity of subdivision points of a polygon in the polygon Mesh is 2, the polygon meets the mesh subdivision condition, and the polygon may be subdivided in the subdivision modes in Cases 1 to 3.

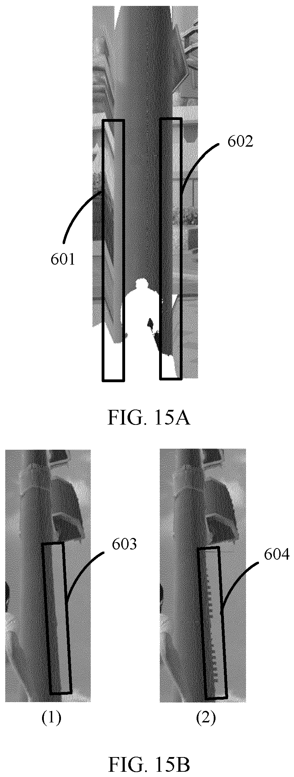

FIG. 15A shows an example of a predicted frame of image. In the predicted frame of image shown in FIG. 15A, image warping is performed on a region 601 according to a solution of the conventional technology, and image warping is performed on a region 602 according to the solution provided in this embodiment. The region 601 and the region 602 are only regions with discontinuous depth information of a static object. It may be learned from the comparison between the region 601 and the region 602 that an image of the region 601 is distorted, and in particular, an edge region of the static object is severely deformed. A picture effect of the region 602 is better, an edge region of the static object is clear, and the edge region of the static object is not deformed.

FIG. 15B is a diagram of an example of a comparison between predicted frames of images. A predicted frame of image shown in (1) in FIG. 15B is generated by image warping according to the solution provided in this embodiment. A predicted frame of image shown in (2) in FIG. 15B is generated by image warping according to the technical solution of the conventional technology. A region 603 in (1) in FIG. 15B and a region 604 in (2) in FIG. 15B are a same image region, and both are regions with discontinuous depth information of a static object. It may be learned from a comparison between (1) and (2) in FIG. 15B that an image of a region 604 is distorted, and in particular, an edge region of a static object is severely deformed. A picture effect of the region 603 is better, an edge region of a static object is clear, and the edge region of the static object is not deformed.

S406: The predicted frame completion module performs image completion on the first predicted frame of image, to obtain a second predicted frame of image, and sends the second predicted frame of image to an image composition module.

Because objects in a raw video move at different speeds, image information overlapping and image information missing may occur in the first predicted frame of image calculated by the electronic device based on the motion vector. That is, the first predicted frame of image is a predicted frame of image in which an image is to be completed.

Therefore, the predicted frame completion module needs to perform image completion on the first predicted frame of image, to obtain the second predicted frame of image. The second predicted frame of image is a predicted frame of image obtained after image completion is performed on the first predicted frame of image.

S407: The image composition module fuses the second predicted frame of image and the UI information, to obtain a target predicted frame of image, and sends the target predicted frame of image for displaying.

The image composition module fuses the second predicted frame of image and the UI information corresponding to the current real frame of image, to obtain the target predicted frame of image.

In this way, after completion on the predicted frame of image, the predicted frame of image is fused with the UI information, to obtain the target predicted frame of image, and further, the target predicted frame of image may be output to a display of the electronic device for displaying.

It should be noted that the foregoing procedure is described by using only one predicted frame of image as an example. A processing procedure of each predicted frame of image is also the same, and details are not described again. The display order of the target predicted frame of image is related to the interpolation mode of the predicted frames of images. For this, refer to the conventional technology. Details are not described herein. For details of this procedure, refer to the conventional technology. Details are not described herein again.

On a mobile platform, a game with a high refresh rate tends to be overheating or lagging due to limitations of power consumption or CPU and GPU capabilities. This affects user experience. To enhance game smoothness experience, a game developer often reduces an original refresh rate, and then generates a predicted frame in image space, to halve rendering at a same frame rate, greatly reduce power consumption of an intelligent terminal, and reduce heat generation of the intelligent terminal.

The image processing method provided in this embodiment of this application can better resolve image distortion in the predicted frame of image, especially deformation in an edge region with discontinuous depth information of a static object, to improve picture quality of the predicted frame of image. In this way, when a quantity of rendered frames is halved, smoothness of the game can be ensured to remain unchanged, power consumption of the intelligent terminal is reduced, and heat generation of the intelligent terminal is reduced, to improve user experience.

In another frame interpolation application scenario, if there is a region with discontinuous depth information (or a large depth difference) in an image, image warping may also be performed according to the image processing method provided in this embodiment of this application, to improve picture quality of the predicted frame of image. Details are not described herein again.

An embodiment further provides a computer storage medium. The computer storage medium stores computer instructions. When the computer instructions are run on an electronic device, the electronic device is enabled to perform related methods and steps, to implement the image processing methods in the foregoing embodiments.

An embodiment further provides a computer program product. When the computer program product runs on a computer, a computer is enabled to perform the related steps, to implement the image processing method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, so that the chip performs the image processing method in the foregoing method embodiments.

The electronic device (for example, a mobile phone), the computer storage medium, the computer program product, or the chip provided in embodiments of this application may be configured to perform the corresponding method provided above. Therefore, for beneficial effects that can be achieved, refer to the beneficial effects of the corresponding method provided above. Details are not described herein again.

Based on the foregoing descriptions of the implementations, a person skilled in the art may understand that, for the purpose of convenient and brief description, division into the foregoing functional modules is taken as an example for illustration. During actual application, the foregoing functions can be allocated to different functional modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or the unit division is merely a logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments, or equivalent replacements may be made to the part of the technical features; and these modifications or replacements do not cause the essence of corresponding technical solutions to depart from the scope of the technical solutions in embodiments of this application.

## Claims

1. An image processing method, comprising:
obtaining a first image and a second image, and calculating a motion vector based on the first image and the second image, wherein the first image and the second image are real frames of images;
creating an initial mesh Mesh of the second image, and determining a to-be-subdivided initial geometric figure corresponding to a static object in the initial Mesh, wherein the initial geometric figure has exactly two subdivision points, located on sides of the initial geometric figure, at most one subdivision point exists on each side of each initial geometric figure, and the subdivision points are determined based on depth values of pixel points in the initial geometric figure, and are edge pixel points of the static object;
performing mesh subdivision on each initial geometric figure based on two subdivision points of the corresponding initial geometric figure, to obtain a target Mesh of the second image, wherein in the target Mesh, a line connecting the two subdivision points of each initial geometric figure is a side of a target triangle, or a partial line segment on the line is a side of the target triangle, and the target triangle is a geometric figure obtained by division in the target Mesh; and
performing image warping on the second image based on the target Mesh and the motion vector, to generate a predicted frame of image corresponding to the first image and the second image.

2. The method according to claim 1, wherein the initial Mesh is a quadrilateral Mesh, and the initial geometric figure is a quadrilateral; and
after the creating an initial Mesh of the second image, the method further comprises:
normalizing the quadrilateral Mesh, to divide each quadrilateral into two triangles.

3. The method according to claim 2, wherein the subdivision points of the to-be-subdivided quadrilateral are a first subdivision point and a second subdivision point, and the to-be-subdivided quadrilateral is divided into a first triangle and a second triangle; and
in the target Mesh,
the first triangle is subdivided into a first sub-triangle, a second sub-triangle, and a third sub-triangle, wherein a common side of the first sub-triangle and the second sub-triangle is a line connecting the first subdivision point and the second subdivision point, and a common side of the second sub-triangle and the third sub-triangle is a line connecting the first subdivision point or the second subdivision point and a vertex of the first triangle; or
the second triangle is subdivided into a fourth sub-triangle, a fifth sub-triangle, and a sixth sub-triangle, wherein a common side of the fourth sub-triangle and the fifth sub-triangle is a line connecting the first subdivision point and the second subdivision point, and a common side of the fifth sub-triangle and the sixth sub-triangle is a line connecting the first subdivision point or the second subdivision point and a vertex of the second triangle; or
the first triangle is subdivided into a seventh sub-triangle, an eighth sub-triangle, and a ninth sub-triangle, and the second triangle is subdivided into a tenth sub-triangle, an eleventh sub-triangle, and a twelfth sub-triangle, wherein a common side of the seventh sub-triangle and the eighth sub-triangle is a line connecting the first subdivision point and a third point, and a common side of the eighth sub-triangle and the ninth sub-triangle is a line connecting the first subdivision point and a vertex of the first triangle; a common side of the tenth sub-triangle and the eleventh sub-triangle is a line connecting the second subdivision point and the third point, and a common side of the eleventh sub-triangle and the twelfth sub-triangle is a line connecting the second subdivision point and a vertex of the second triangle; and the line connecting the first subdivision point and the second subdivision point intersects with a common side of the first triangle and the second triangle at the third point.

4. The method according to claim 1, further comprising:
setting depth information of each triangle in the target Mesh.

5. The method according to claim 4, wherein the performing image warping on the second image based on the target Mesh and the motion vector comprises:
for each triangle in the target Mesh, determining a motion vector of each vertex of the triangle, and moving the triangle based on the motion vector of each vertex of the triangle; and
when each triangle moves to a target position, determining a coverage relationship between the triangle and another triangle at the target position based on depth information of the triangle and depth information of the another triangle at the target position.

6. The method according to claim 2, wherein the subdivision points of the to-be-subdivided quadrilateral are a first subdivision point and a second subdivision point, and the to-be-subdivided quadrilateral is divided into a first triangle and a second triangle; and
the performing mesh subdivision on the initial geometric figure based on the two subdivision points of the initial geometric figure comprises:
performing mesh subdivision on the first triangle and/or the second triangle according to a matched mesh subdivision policy based on a position relationship between each of the first subdivision point and the second subdivision point and each of the first triangle and the second triangle.

7. The method according to claim 6, wherein the performing mesh subdivision on the first triangle and/or the second triangle according to a matched mesh subdivision policy based on a position relationship between each of the first subdivision point and the second subdivision point and each of the first triangle and the second triangle comprises:
when a horizontal coordinate of the first subdivision point is equal to horizontal coordinates of a first vertex and a second vertex of the first triangle, and a vertical coordinate of the second subdivision point is equal to vertical coordinates of the second vertex and a third vertex of the first triangle, connecting the first subdivision point and the second subdivision point, and connecting the first subdivision point and the third vertex of the first triangle or connecting the second subdivision point and the first vertex of the first triangle, to subdivide only the first triangle into three triangles.

8. The method according to claim 6, wherein the performing mesh subdivision on the first triangle and/or the second triangle according to a matched mesh subdivision policy based on a position relationship between each of the first subdivision point and the second subdivision point and each of the first triangle and the second triangle comprises:
when a horizontal coordinate of the first subdivision point is equal to horizontal coordinates of a first vertex and a second vertex of the second triangle, and a vertical coordinate of the second subdivision point is equal to vertical coordinates of the second vertex and a third vertex of the second triangle, connecting the first subdivision point and the second subdivision point, and connecting the first subdivision point and the third vertex of the second triangle or connecting the second subdivision point and the first vertex of the second triangle, to subdivide only the second triangle into three triangles.

9. The method according to claim 6, wherein the performing mesh subdivision on the first triangle and/or the second triangle according to a matched mesh subdivision policy based on a position relationship between each of the first subdivision point and the second subdivision point and each of the first triangle and the second triangle comprises:
when a vertical coordinate of the first subdivision point is equal to vertical coordinates of a second vertex and a third vertex of the first triangle, and a vertical coordinate of the second subdivision point is equal to vertical coordinates of a second vertex and a third vertex of the second triangle, connecting the first subdivision point and the second subdivision point, connecting the first subdivision point and a first vertex of the first triangle, and connecting the second subdivision point and a first vertex of the second triangle, to subdivide each of the first triangle and the second triangle into three triangles;
when a horizontal coordinate of the first subdivision point is equal to horizontal coordinates of the first vertex and the second vertex of the first triangle, and a horizontal coordinate of the second subdivision point is equal to horizontal coordinates of the first vertex and the second vertex of the second triangle, connecting the first subdivision point and the second subdivision point, connecting the first subdivision point and the third vertex of the first triangle, and connecting the second subdivision point and the third vertex of the second triangle, to subdivide each of the first triangle and the second triangle into three triangles;
when the vertical coordinate of the first subdivision point is equal to the vertical coordinates of the second vertex and the third vertex of the first triangle, and the horizontal coordinate of the second subdivision point is equal to the horizontal coordinates of the first vertex and the second vertex of the second triangle, connecting the first subdivision point and the second subdivision point, connecting the first subdivision point and the first vertex of the first triangle, and connecting the second subdivision point and the third vertex of the second triangle, to subdivide each of the first triangle and the second triangle into three triangles; or
when the horizontal coordinate of the first subdivision point is equal to the horizontal coordinates of the first vertex and the second vertex of the first triangle, and the vertical coordinate of the second subdivision point is equal to the vertical coordinates of the second vertex and the third vertex of the second triangle, connecting the first subdivision point and the second subdivision point, connecting the first subdivision point and the third vertex of the first triangle, and connecting the second subdivision point and the first vertex of the second triangle, to subdivide each of the first triangle and the second triangle into three triangles.

10. The method according to claim 1, wherein the determining a to-be-subdivided initial geometric figure corresponding to a static object in the initial Mesh comprises:
determining an initial geometric figure corresponding to the static object in the initial Mesh;
determining subdivision points of each initial geometric figure; and
using an initial geometric figure that has two subdivision points and in which at most one subdivision point exists on each side as the to-be-subdivided initial geometric figure.

11. The method according to claim 10, wherein the determining subdivision points of the initial geometric figure comprises:
determining each edge pixel point in the initial geometric figure, wherein a depth value of the edge pixel point falls within a preset range, and a difference between the depth value of the edge pixel point and a depth value of a surrounding pixel point exceeds a preset threshold; and
using the edge pixel point on a side of the initial geometric figure as the subdivision point of the initial geometric figure.

12. The method according to any one of claims 1 to 11, wherein the first image and the second image are rendered images.

13. The method according to claim 12, wherein the obtaining a first image and a second image comprises:
obtaining a first resource image, and separating user interface UI information from the first resource image, to obtain the first image;
obtaining a second resource image, and separating UI information from the second resource image, to obtain the second image; and
after the generating a predicted frame of image corresponding to the first image and the second image, the method further comprises:
performing image completion on the predicted frame of image, and fusing a predicted frame of image obtained by completion and the UI information, to obtain a target predicted frame of image.

14. The method according to claim 13, wherein the first resource image and the second resource image are resource images in a game application.

15. An electronic device, comprising:
one or more processors;
a memory; and
one or more computer programs, wherein the one or more computer programs are stored in the memory, and when the computer program is executed by the one or more processors, the electronic device is enabled to perform the image processing method according to any one of claims 1 to 14.

16. A computer-readable storage medium, comprising a computer program, wherein when the computer program is run on an electronic device, the electronic device is enabled to perform the image processing method according to any one of claims 1 to 14.
